(19) **Europäisches Patentamt / European Patent Office / Office européen des brevets**

(11) **EP 4 306 583 B1**

(12) **EUROPEAN PATENT SPECIFICATION**

(45) Date of publication and mention
of the grant of the patent:
**16.04.2025 Bulletin 2025/16**

(21) Application number: **23184457.2**

(22) Date of filing: **10.07.2023**

(51) International Patent Classification (IPC):
**C08J 9/18** (2006.01)  **C08J 9/232** (2006.01)
**B29C 44/34** (2006.01)

(52) Cooperative Patent Classification (CPC):
**C08J 9/18; B29C 44/3461; C08J 9/232;**
B29C 44/3426; B29K 2023/12; C08J 2201/034;
C08J 2205/052; C08J 2323/16

(54) **THERMOPLASTIC RESIN EXPANDED BEAD AND MOLDED ARTICLE OF THERMOPLASTIC RESIN EXPANDED BEADS**

EXPANDIERTE PERLEN AUS THERMOPLASTISCHEM HARZ UND FORMKÖRPER AUS EXPANDIERTEN PERLEN AUS THERMOPLASTISCHEM HARZ

BILLE EXPANSÉE DE RÉSINE THERMOPLASTIQUE ET ARTICLE MOULÉ DE BILLES EXPANSÉES DE RÉSINE THERMOPLASTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.07.2022 JP 2022112865**

(43) Date of publication of application:
**17.01.2024 Bulletin 2024/03**

(73) Proprietor: **JSP Corporation**
**Tokyo 100-0005 (JP)**

(72) Inventors:
• **SAKAMURA, Takumi**
  **Kanuma-shi, 322-0014 (JP)**
• **OHTA, Hajime**
  **Kanuma-shi, 322-0014 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**EP-A2- 0 697 274    US-A1- 2003 011 091**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a thermoplastic resin expanded bead and a molded article of thermoplastic resin expanded beads.

Description of Related Art

A molded article of polypropylene-based resin expanded beads is lightweight and excellent in cushioning property, rigidity, and the like, and thus is used for various applications. The molded article of polypropylene-based resin expanded beads is produced by, for example, a method called an in-mold molding method in which a mold for molding is filled with polypropylene-based resin expanded beads, and then steam is supplied into the mold to perform heating. In the in-mold molding method, when steam is supplied into the mold, the expanded beads are secondarily expanded and the surfaces thereof are melted. As a result, the expanded beads in the mold are mutually fusion-bonded, so that a molded article having a shape corresponding to a shape of a cavity of the mold can be obtained. The molded article immediately after molding tends to swell due to secondary expanding. Thus, the molded article is cooled with water, air, or the like in the mold and then released from the mold.

For example, JP 2000-129028 A discloses a technique for in-mold molding of expanded beads using a polypropylene-based resin having a melting point, a melt flow index, a Z average molecular weight, and the like that are adjusted to specific ranges. In addition, JP H07-137064 A discloses a technique for in-mold molding of tubular expanded beads each having through-holes therein. EP 0 697 274 A2 discloses an expansion-molded article of a polyolefin resin made of tubular foamed particles with a through-hole.

SUMMARY OF THE INVENTION

When the molded article of the expanded beads (hereinafter referred to as expanded beads molded article) is released from the mold and is stored at normal temperature in the production process of the molded article described above, the steam having flowed into cells of the expanded beads molded article during in-mold molding is condensed in the cells, and the insides of the cells have a negative pressure. As a result, volume shrinkage may occur in the expanded beads molded article, and the molded article may be greatly deformed. Therefore, after releasing the molded article from the mold, the molded article of expanded beads is subjected to an aging process in which the molded article is left to stand for a predetermined period of time under a high-temperature atmosphere adjusted to a temperature of, for example, about 60°C to 80°C to recover the shape of the molded article of expanded beads.

However, the aging process requires capital investment and time and effort, and thus, it is desired to omit the aging process to greatly improve productivity of the expanded beads molded article.

In addition, with the recent increase in environmental awareness, it is desired to reduce energy consumption in the production process of molded bodies. From such a viewpoint, it is desired to shorten a cooling time in the mold in addition to omission of the aging process.

However, in expanded beads described in JP 2000-129028 A, although the aging process can be shortened, the aging process is still necessary, and in a case where the aging process is omitted, the expanded beads molded article is significantly shrunk and deformed, so that it is difficult to obtain the expanded beads molded article having a desired shape. In addition, there is room for improvement in shortening the cooling time in the mold for the expanded beads described in JP 2000-129028 A. Furthermore, it is necessary to use a special raw material for the expanded beads described in JP 2000-129028 A, and thus, there is also room for improvement in raw material procurement.

Although the expanded beads described in JP H07-137064 A can shorten the cooling time in the mold, voids derived from the through-holes of the expanded beads are formed on a surface of the resulting molded article, and thus there is a problem that the appearance of the molded article is significantly poor and rigidity thereof is insufficient.

The present invention has been made in view of such a background, and is directed to providing a thermoplastic resin expanded bead capable of shortening a cooling time in a mold and obtaining an expanded beads molded article having a desired shape and being excellent in appearance and rigidity even when an aging process is omitted, and a molded article of thermoplastic resin expanded beads comprising the expanded beads.

One aspect of the present invention is a thermoplastic resin expanded bead according to claim 1.

Further developments are given in the dependent claims.

Another aspect of the present invention is a molded article of thermoplastic resin expanded beads according to claim 8.

A further development is given in claim 9.

According to the above aspects, it is possible to provide a thermoplastic resin expanded bead (hereinafter, referred to as a "expanded bead") that makes it possible to shorten a cooling time in a mold and obtain a molded article of thermoplastic resin expanded beads which has a desired shape and is excellent in appearance and rigidity even when an aging process is omitted, and a molded article of thermoplastic resin expanded beads (hereinafter, referred to as a "molded article of expanded beads" or "molded article") comprising the expanded beads.

BRIEF DESCRIPTION OF THE DRAWINGS

FIG. 1 is a perspective view of an expanded bead;
FIG. 2 is a cross-sectional view taken along line II-II in FIG. 1 (a plan view of a cut surface of the expanded bead);
FIG. 3 is an explanatory diagram showing a method for calculating an area of a high-temperature peak;
FIG. 4 is a perspective view of an expanded bead of Example 1;
FIG. 5 is a cross-sectional view taken along line V-V in FIG. 4 (a plan view of a cut surface of the expanded bead);
FIG. 6 is a perspective view of an expanded bead of Example 2;
FIG. 7 is a cross-sectional view taken along line VII-VII in FIG. 6 (a plan view of a cut surface of the expanded bead);
FIG. 8 is a perspective view of an expanded bead of Example 4; and
FIG. 9 is a cross-sectional view taken along line IX-IX in FIG. 8 (a plan view of a cut surface of the expanded bead).

DETAILED DESCRIPTION OF PREFERRED EMBODIMENTS

Thermoplastic resin expanded bead

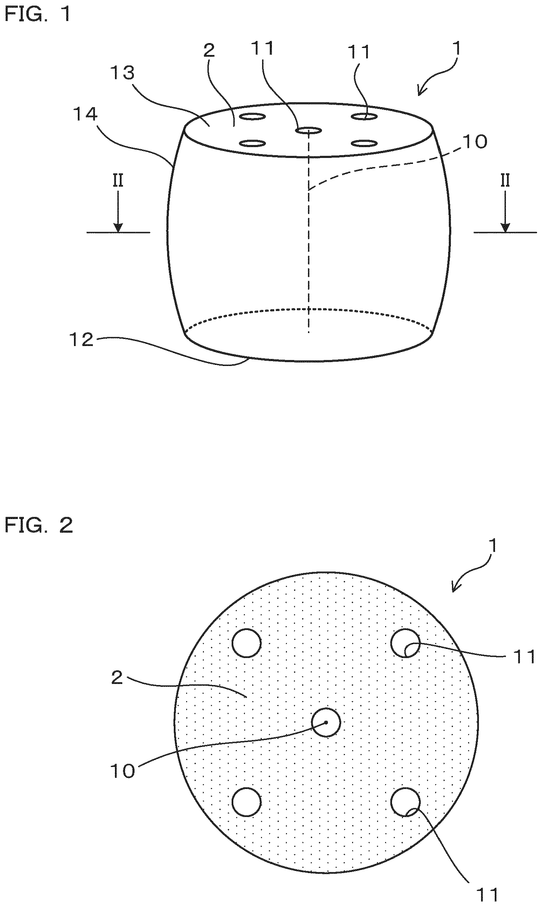

A thermoplastic resin expanded bead 1 has a thermoplastic resin foam layer 2 (hereinafter, referred to as a "foam layer 2") mainly including a thermoplastic resin. As illustrated in FIG. 1, the expanded bead 1 has a columnar shape, and has two or more and eight or less through-holes 11 penetrating the inside thereof in the axial direction. The columnar shape described above includes, for example, a shape surrounded by a bottom surface 12 having a substantially circular shape, a top surface 13 disposed above the bottom surface 12 and having substantially the same shape as the bottom surface 12, and a side peripheral surface 14 connecting an end edge of the bottom surface 12 and an end edge of the top surface 13, as illustrated in FIG. 1. A ratio Ct/A of a total cross-sectional area Ct of the through-holes 11 to a cross-sectional area A of the expanded bead 1 in a cut surface (see FIG. 2) of the expanded bead 1 obtained by cutting the expanded bead 1 at the center in the axial direction along a plane perpendicular to the axial direction of expanded bead is 0.02 or more and 0.15 or less.

As described above, when two or more and eight or less through-holes are provided in the expanded bead having a columnar shape and the ratio Ct/A of the total cross-sectional area Ct of the through-holes to the cross-sectional area A of the expanded bead is set within the specific range, a cooling time in a mold can be shortened, and significant shrinkage, deformation, and the like of the molded article can be curtailed even in a case where the aging process is omitted. Furthermore, a molded article obtained by in-mold molding of the expanded beads is excellent in appearance and rigidity.

The reason why such an effect is obtained by the expanded bead is considered to be, for example, as follows. That is, when the expanded bead is subjected to in-mold molding, an open cell structure including open cells, that is, a minute space portion communicating with the outside of the molded article is formed in the molded article. Specifically, the open cell structure of the molded article is formed by complicatedly connecting voids formed by allowing through-holes of a plurality of expanded beads to communicate with each other, voids formed by allowing the through-holes of the expanded beads to communicate with gaps between the expanded beads, voids formed by allowing gaps between the expanded beads to communicate with each other, open cells formed by destruction of closed cells of the expanded beads constituting the molded article, and the like.

The open cell structure communicates with the outside of the molded article, and thus, it is considered that when the molded article having an appropriate open cell content is released from the mold, the outside air quickly flows into the cells in the molded article through the open cell structure. When the outside air flows into the cells inside the molded article, an internal pressure of the entire molded article is easily and quickly balanced with a pressure of the atmosphere outside the molded article. It is considered that as a result, dimensions of the molded article are easily stabilized early, and significant shrinkage and deformation of the molded article can be curtailed even when the aging process is not performed.

In addition, the expanded bead has the through-holes, and thus, it is considered that steam can flow not only between gaps of the expanded beads but also through the through-holes thereof when steam is supplied into the mold. It is considered that this allows steam to easily reach the inside of the mold, so that the entire expanded beads in the mold can be easily heated. Accordingly, it is possible to obtain a molded article having excellent fusion-bondability and a good appearance even under a condition where a molding temperature during in-mold molding is low. As a result, an amount of heat received by the expanded beads by steam during the in-mold molding can be reduced to a low level. In addition, an excessive increase in the internal temperature of the molded article after demolding is curtailed. It is considered that as a result, the dimensions of the molded article after in-mold molding are easily stabilized early.

Furthermore, the expanded bead has a plurality of through-holes, and thus, secondary expandability of the expanded bead can be appropriately lowered. It is considered that as a result, outward expansion can be appropriately curtailed when the expanded bead is secondarily expanded during in-mold molding. In addition, when the expanded bead is provided with the plurality of through-holes, the above-described open cell structure is formed in the molded article, and surface areas of minute space portions derived from the through-holes of the expanded bead can be increased in the molded article. It is presumed that as a result, the molded article in the mold can be efficiently cooled and a surface pressure applied to the mold can be reduced more quickly, and it is considered that the cooling time in the mold can be shortened.

The value of the ratio Ct/A in the expanded bead is within the specific range, and the expanded bead is provided with the plurality of through-holes. As compared with a case where the number of through-holes is one, this can make a hole diameter of each through-hole in the expanded bead smaller. It is considered that as a result, rigidity of the molded article can be enhanced. In addition, it is considered that the through-holes are less likely to stand out on the surface of the molded article by reducing the hole diameters of the individual through-holes, so that the appearance can be improved.

In a case where the expanded bead has no through-hole, a molding temperature tends to be high, and the open cell structure may not be sufficiently formed in the resulting molded article. Thus, in this case, it is difficult to curtail significant shrinkage, deformation, and the like of the molded article when the aging process is omitted. In addition, in this case, the secondary expandability of the expanded bead becomes excessively high, so that the cooling time in the mold may become long.

Furthermore, in a case where the value of the ratio Ct/A in the expanded bead is within the specific range and the number of through-holes is one, the hole diameter of the through-hole tends to be larger than that in a case where the number of through-holes is two or more. For this reason, the through-hole becomes conspicuous on the surface of the molded article after in-mold molding, so that the appearance of the molded article may be deteriorated. In addition, in this case, the cooling time in the mold may be long. As a cause of this, for example, it is conceivable that the surface area of a minute space portion derived from the through-hole of the expanded bead in the molded article tends to be small. These problems can be easily avoided by setting the number of through-holes to 2 or more, preferably 3 or more, more preferably 4 or more. In order to define the preferable range of the number of through-holes, the upper limit and the lower limit selected from the abovementioned limits may be appropriately combined. For example, the preferable range of the number of through-holes may be within 2 or more and 8 or less, 3 or more and 7 or less, or 4 or more and 6 or less.

On the other hand, in a case where the number of through-holes in the expanded bead is 9 or more, the secondary expandability of the expanded bead may be excessively lowered. As a result, the rigidity of the molded article may be lowered and the appearance may be deteriorated.

In a case where the ratio Ct/A of the total cross-sectional area Ct of the through-holes to the cross-sectional area A of the expanded bead is too low, the open cell structure is less likely to be formed in the molded article, so that the aging process may be required to curtail significant shrinkage and deformation of the molded article. In addition, in this case, the secondary expandability of the expanded bead may become excessively high, so that the cooling time may be long. When the ratio Ct/A is set to 0.02 or more, these problems can be easily avoided, the cooling time in the mold can be shortened, and significant shrinkage and deformation of the molded article can be curtailed even in a case where the aging process is not performed. From the viewpoint of further shortening the cooling time in the mold, the ratio Ct/A is preferably 0.03 or more, more preferably 0.04 or more, and still more preferably 0.05 or more.

On the other hand, in a case where the ratio Ct/A of the total cross-sectional area Ct of the through-holes to the cross-sectional area A of the expanded bead is too high, the rigidity of the molded article may be lowered or the appearance may be deteriorated. When the ratio Ct/A is set to 0.15 or less, these problems can be easily avoided, and the rigidity and appearance of the molded article can be improved. From the viewpoint of more reliably achieving such an action and effect, the ratio Ct/A is preferably 0.13 or less, more preferably 0.11 or less, and still more preferably 0.10 or less.

The ratio Ct/A is preferably 0.03 or more and 0.13 or less, more preferably 0.04 or more and 0.11 or less, and still more preferably 0.05 or more and 0.10 or less, from the viewpoint of more easily obtaining a molded article having favorable rigidity and appearance while obtaining the effect of curtailing significant shrinkage and deformation of the molded article and shortening the cooling time.

The method for calculating the cross-sectional area A of the expanded bead described above is as follows. First, the expanded bead 1 as illustrated in FIG. 1 is cut along a plane perpendicular to the axial direction at the center in the axial direction of expanded bead to expose a cut surface (that is, a surface of a cut portion generated when the expanded bead is cut perpendicularly to the axial direction) of the expanded bead as illustrated in FIG. 2 (cross-sectional view taken along line II-II in FIG. 1). The cross-sectional area of the expanded bead 1 at the cut surface is measured. Note that the cross-sectional area of the expanded bead 1 does not include the cross-sectional areas of the through-holes 11 (That is, opening areas).

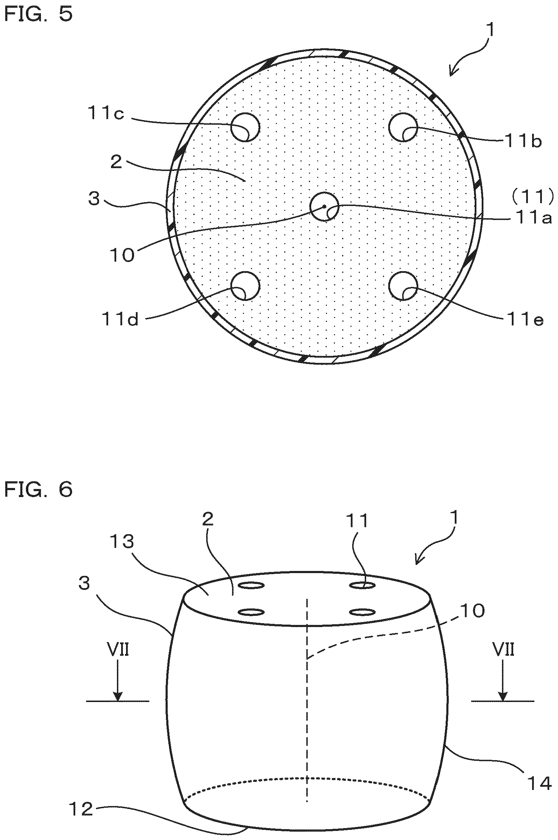

For example, as illustrated in FIG. 2, in a case where the expanded bead 1 includes only the foam layer 2, the cross-sectional area of the expanded bead 1 is equal to a cross-sectional area of the foam layer 2 at the cut surface. In contrast, for example, as illustrated in FIG. 5 and the like, in a case where the expanded bead 1 has the foam layer 2 and the thermoplastic resin cover layer 3 (hereinafter, referred to as a "cover layer 3") covering the foam layer 2, the cross-sectional area of the expanded bead 1 is equal to the total of the cross-sectional area of the foam layer 2 and a cross-sectional area of the cover layer 3 at the cut surface.

The above operation is performed on 100 or more expanded beads, and an arithmetic average value of the cross-sectional areas of the expanded beads is defined as the cross-sectional area A of the expanded bead at the cut surface. Note that the cross-sectional area of the expanded bead at the cut surface can be measured, for example, by taking a photograph of the cut surface of the expanded bead and analyzing the image. The cross-sectional area A of the expanded bead obtained by the method described above may be referred to as an "average cross-sectional area A of the expanded beads".

A method for calculating the total cross-sectional area Ct of the through-holes is as follows. First, as illustrated in FIG. 2, the expanded bead 1 is cut at the center in the axial direction thereof along a plane perpendicular to the axial direction of expanded bead to expose a cut surface of the expanded bead as illustrated in FIG. 2. The total cross-sectional area of all the through-holes in the cut surface is measured.

The above operation is performed on 50 or more expanded beads, and an arithmetic average value of the total cross-sectional areas of the through-holes is defined as the total cross-sectional area Ct of the through-holes. Note that the cross-sectional areas of the through-holes at the cut surface can be measured, for example, by taking a photograph of the cut surface of the expanded bead and analyzing the image.

A ratio Ca/A of a cross-sectional area Ca per one through-hole to the cross-sectional area A of the expanded bead in a cut surface obtained by cutting the expanded bead in a plane perpendicular to the axial direction at the center in the axial direction of expanded bead is preferably 0.005 or more and 0.05 or less, more preferably 0.005 or more and 0.04 or less, still more preferably 0.005 or more and 0.03 or less, and particularly preferably 0.005 or more and 0.02 or less. In this case, the rigidity and appearance of the molded article can be more easily improved. Note that the cross-sectional area Ca per one through-hole is obtained by dividing the total cross-sectional area Ct of the through-holes by the number of through-holes.

The through-hole has a hole diameter d of 0.1 mm or more and 0.5 mm or less in a cut surface obtained by cutting the expanded bead in a plane perpendicular to the axial direction at the center in the axial direction of expanded bead. When the hole diameter d of the through-hole is set to 0.5 mm or less, the rigidity and the appearance of the molded article can be more easily improved. From such a viewpoint, the hole diameter d of the through-hole is more preferably 0.45 mm or less, and still more preferably 0.4 mm or less. Further, when the hole diameter d of the through-hole is set to 0.1 mm or more, when steam is supplied into the mold, the steam can more easily pass through the through-hole. From such a viewpoint, the hole diameter d of the through-hole is more preferably 0.2 mm or more. In order to define the preferable range of the hole diameter d, the upper limit and the lower limit selected from the abovementioned limits may be appropriately combined. For example, the preferable range of the hole diameter d may be within 0.1 mm or more and 0.45 mm or less, 0.1 mm or more and 0.4 mm or less, or 0.2 mm or more and 0.4 mm or less.

The hole diameter d of the through-hole of the expanded bead is determined as follows. First, the expanded bead 1 is cut along a plane perpendicular to the axial direction at the center in the axial direction of expanded bead to expose a cut surface as illustrated in FIG. 2. Next, a photograph of the cut surface is taken, and a cross-sectional area (that is, an opening area) of each of the through-holes 11 in the cut surface is calculated. Then, a diameter of a virtual perfect circle having the same area as the cross-sectional area of the through-hole 11 is calculated, and this value is defined as the hole diameter of each through-hole.

The above operation is performed on 50 or more expanded beads, and an arithmetic average value of the hole diameters of the through-holes is defined as the hole diameter d of the through-hole of the expanded bead. Note that even when a cross-sectional shape and a hole diameter of each through-hole are not uniform in the axial direction of the expanded bead, the hole diameter d of the through-hole is determined on the basis of the hole diameter of the through-hole in the cut surface as described above. The hole diameter d of the through-hole of the expanded bead obtained by the above-described method may be referred to as an "average hole diameter d of the through-holes of the expanded bead".

The hole diameter d of the through-hole can be adjusted to fall within the above-described specific range by adjusting a size of a hole diameter dr of the through-hole in the resin bead described below, an apparent density of the expanded bead, and the like. In addition, when the expanded bead is formed into a second-step expanded bead by two-step foaming method, the hole diameter d can be more easily adjusted to a small value.

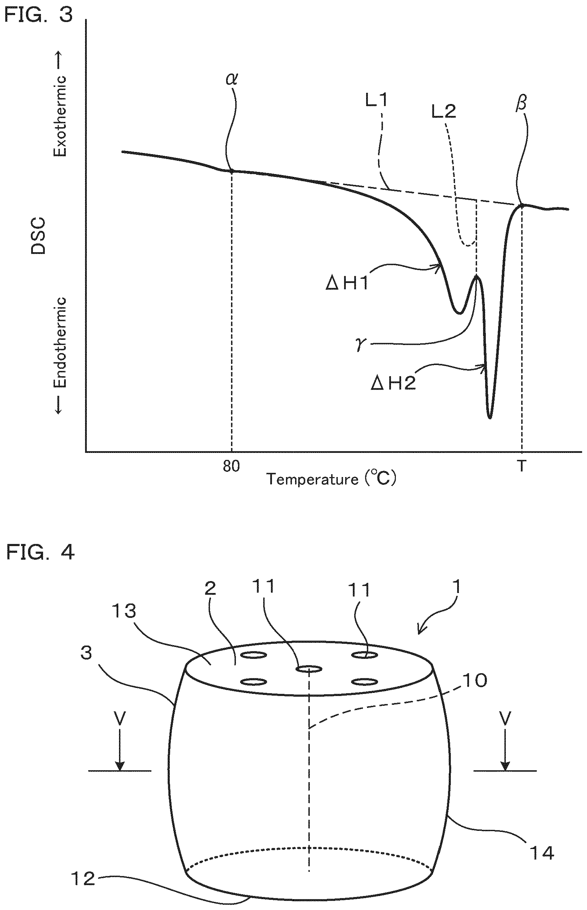

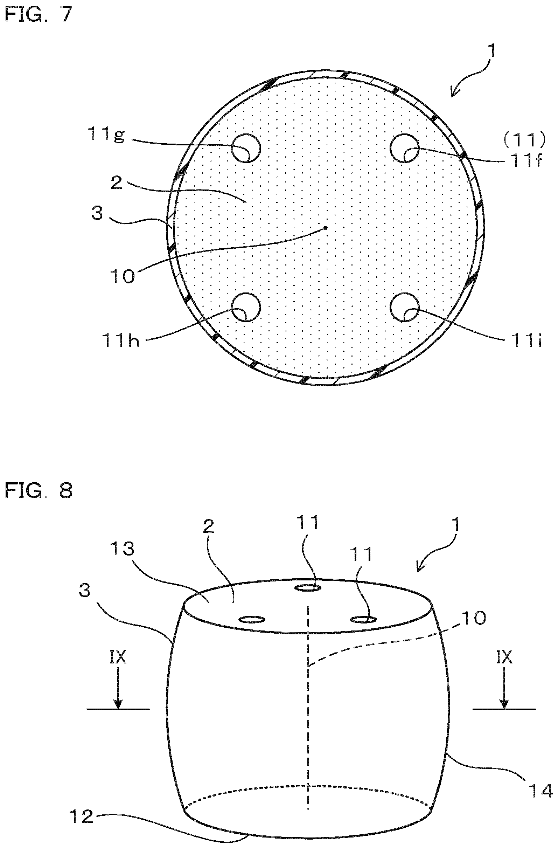

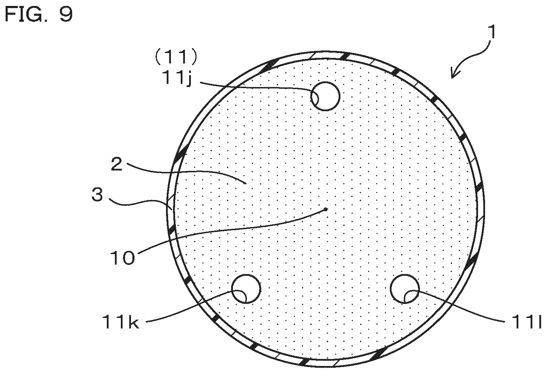

Arrangement of the through-holes in the cut surface of the expanded bead is not particularly limited, and various aspects can be taken. For example, as illustrated in FIGS. 4 and 5, one through-hole 11a of the plurality of through-holes 11 (11a to 11e) may be arranged so as to penetrate a central axis 10 of the expanded bead 1, and the other through-holes 11b to 11e may be arranged around the central axis 10 of the expanded bead 1. The through-holes 11b to 11e in the expanded bead 1 illustrated in FIG. 5 are arranged at positions at which intervals in the circumferential direction in the cut surface of the expanded bead 1 are substantially equal. In addition, for example, as illustrated in FIG. 7, four through-holes 11 (11f to 11i) may be arranged at positions at which intervals in the circumferential direction in the cut surface of the expanded bead 1 are substantially equal, around the central axis 10 of the expanded bead 1. Similarly, as illustrated in FIG. 9, three through-holes 11 (11j to 11l) may be arranged around the central axis 10 of the expanded bead 1 at positions at which intervals in the circumferential direction in the cut surface of the expanded bead 1 are substantially equal.

From the viewpoint of further enhancing the effect by providing the plurality of through-holes described above, it is preferable that the plurality of through-holes are arranged at approximately equal intervals in the cut surface of the expanded bead. From the same viewpoint, it is more preferable that at least some through-holes among the plurality of through-holes are arranged around the central axis of the expanded bead at positions at which intervals in the circumferential direction are approximately equal in a cut surface obtained by cutting the expanded bead in the plane perpendicular to the axial direction at the center in the axial direction.

In addition, a ratio R/d of a distance R between through-holes of the expanded bead to the hole diameter d of the through-hole in the cut surface of the expanded bead is preferably 2.0 or more, and more preferably 2.5 or more. In this case, the appearance of the molded article can be further improved, and the rigidity of the molded article can be further enhanced. In addition, the ratio R/d is preferably 4.5 or less, and more preferably 3.5 or less. In this case, the cooling time of the molded article in the mold can be further shortened. In order to define the preferable range of the ratio R/d, the upper limit and the lower limit selected from the abovementioned limits may be appropriately combined. For example, the preferable range of the ratio R/d may be within 2.0 or more and 4.5 or less, or 2.5 or more and 3.5 or less.

Note that a method for calculating the distance R between through-holes described above is as follows. First, in the cut surface of the expanded bead, a position of a geometric center of each through-hole in the cross-sectional shape is determined, and this position is set as a center point of each through-hole. Next, for all the through-holes, a distance between a center point of a through-hole to be measured and a center point of a through-hole having the center point closest to the center point of the through-hole to be measured, that is, a center-to-center distance is calculated. Then, an arithmetic average value of center-to-center distances in all the through-holes is defined as the distance between through-holes of each expanded bead. The above operation is performed on 100 or more expanded beads, and an arithmetic average value of the distances between the through-holes is defined as the distance between through-holes R of the expanded bead. Note that the distance between through-holes R of the expanded bead obtained by the above-described method may be referred to as an "average distance between through-holes R of the expanded bead".

An outer diameter D of the expanded bead is preferably 2 mm or more, more preferably 2.5 mm or more, and still more preferably 3 mm or more, from the viewpoint that a wall thickness of the expanded bead increases to improve the secondary expandability of the expanded bead and the rigidity of the molded article, and from the viewpoint that the deformation and shrinkage of the molded article can be more reliably curtailed when the aging process is omitted. On the other hand, from the viewpoint of improving the filling property of the expanded bead into the mold, the outer diameter D of the expanded bead is preferably 8 mm or less, more preferably 5 mm or less, and still more preferably 4.5 mm or less.

The method for calculating the outer diameter D of the expanded bead described above is as follows. First, the expanded bead 1 is cut along a plane perpendicular to the axial direction at the center in the axial direction of expanded bead to expose a cut surface of the expanded bead 1 as illustrated in FIG. 2. The cross-sectional area of the expanded bead 1 and the cross-sectional areas of the through-holes 11 in the cut surface are calculated. Then, the total of the cross-sectional area of the expanded bead 1 and the cross-sectional areas of the through-holes 11 is calculated, and a diameter of a virtual perfect circle having the same area as the value of the total is defined as the outer diameter of each expanded bead.

In this manner, the outer diameter is calculated for 100 or more expanded beads 1, and an arithmetic average value of the outer diameters of the expanded beads is defined as the outer diameter D of the expanded bead. Note that the outer diameter of the expanded bead 1 in the cut surface can be measured, for example, by taking a photograph of the cut surface of the expanded bead and analyzing the image. The outer diameter D of the expanded bead obtained by the method described above may be referred to as an "average outer diameter D of the expanded beads".

A bulk density of the expanded beads is preferably 10 kg/m$^3$ or more and 50 kg/m$^3$ or less, and more preferably 10 kg/m$^3$ or more and 35 kg/m$^3$ or less. A ratio of the apparent density to the bulk density of the expanded beads is preferably 1.7 or more and 1.9 or less, and more preferably 1.7 or more and 1.8 or less. When in-mold molding is performed using the expanded beads having a bulk density within the above range, a molded article that is lightweight and excellent in rigidity can be easily obtained. In addition, when in-mold molding is performed using the expanded beads having the ratio of the apparent density to the bulk density within the above-described specific range in addition to the bulk density, it is possible to more easily set an open cell content of the molded article to an appropriate range, more easily improve the rigidity and appearance of the molded article, and more reliably obtain the effect of curtailing shrinkage and deformation of the molded article when the aging process is not performed.

The method for calculating the bulk density of the expanded beads is as follows. First, the expanded beads are left to stand for 24 hours or longer in an environment of a relative humidity of 50%, a temperature of 23°C, and an atmospheric pressure of 1 atm to condition the expanded beads. Next, the expanded beads after the conditioning are filled in a measuring cylinder so as to be naturally deposited, and a bulk volume (unit: L) of the expanded beads is read from the scale of the measuring cylinder. Then, a value obtained by dividing a mass (unit: g) of the expanded beads in the measuring cylinder by the above-described bulk volume is subjected to unit conversion, so that the bulk density (unit: $kg/m^3$) of the expanded bead can be obtained.

A method for calculating the apparent density of the expanded bead is as follows. First, the expanded bead group is left to stand for one day in an environment of a relative humidity of 50%, a temperature of 23°C, and an atmospheric pressure of 1 atm to condition the expanded beads. After the mass (unit: g) of the expanded beads is measured, the expanded beads are immersed in a measuring cylinder containing an alcohol (for example, ethanol) at 23°C using a wire mesh or the like, and a volume (unit: L) of the expanded beads is determined from an increase in a liquid level. Then, a value obtained by dividing the mass of the expanded beads by the volume of the expanded beads is subjected to unit conversion, so that the apparent density (unit: $kg/m^3$) of the expanded bead can be calculated.

From the viewpoint of a balance between a lightweight property and rigidity of the molded article, the apparent density of the expanded bead is preferably 10 $kg/m^3$ or more and 150 $kg/m^3$ or less, more preferably 15 $kg/m^3$ or more and 100 $kg/m^3$ or less, still more preferably 20 $kg/m^3$ or more and 80 $kg/m^3$ or less, and particularly preferably 25 $kg/m^3$ or more and 60 $kg/m^3$ or less. When in-mold molding is performed using the expanded bead having a small apparent density in this manner, a molded article that is more lightweight can be easily obtained. Conventionally, when a molded article having a particularly small density is produced, the molded article is likely to be significantly deformed after demolding, and it is difficult to omit the aging process. **In** contrast, because the expanded bead, even having a small apparent density, makes it possible to omit the aging step, a lightweight molded article having a desired shape can be produced even without aging.

The expanded bead has a thermoplastic resin foam layer. As a thermoplastic resin constituting the foam layer, for example, a crystalline thermoplastic resin such as a polypropylene-based resin, a polyethylene-based resin, a polyamide-based resin, or a crystalline polyester-based resin can be suitably used. Note that in the present specification, the polypropylene-based resin refers to a homopolymer of a propylene monomer and a propylene-based copolymer containing 50 mass% or more of structural units derived from propylene. The polyethylene-based resin refers to a homopolymer of an ethylene monomer and an ethylene-based copolymer containing 50 mass% or more of structural units derived from ethylene.

In the present specification, the phrase "crystalline thermoplastic resin" means that the thermoplastic resin has an endothermic peak heat quantity accompanying melting of a resin based on a DSC curve obtained at a heating rate of 10°C/min using a heat flux differential scanning calorimeter according to JIS K 7122 (1987), "Measurement of heat of melting after constant heat treatment" (the heating rate and the cooling rate in conditioning of the test piece are both set to 10°C/min) is 5 J/g or more. The endothermic peak heat quantity is preferably 15 J/g or more, and more preferably 30 J/g or more.

The foam layer may contain a polymer other than the plastic resin, such as an elastomer, as long as the above-described action and effect are not impaired. The content of the other polymer in the foam layer is preferably 20 mass% or less, more preferably 10 mass% or less, still more preferably 5 mass% or less, and 0, that is, it is particularly preferable that the foam layer substantially contains only the thermoplastic resin as a polymer.

In addition, the foam layer may contain an additive such as a cell adjusting agent, a crystal nucleating agent, a flame retardant, a flame retardant aid, a plasticizer, an antistatic agent, an antioxidant, an ultraviolet inhibitor, a light stabilizer, a conductive filler, an antibacterial agent, or a colorant as long as the above-described action and effect are not impaired. The content of the additive in the foam layer is preferably, for example, 0.01 parts by mass or more and 10 parts by mass or less with respect to 100 parts by mass of the thermoplastic resin.

The thermoplastic resin constituting the foam layer is preferably a polypropylene-based resin, and more preferably a propylene-based copolymer obtained by copolymerizing propylene with any other monomer(s). Preferable examples of the propylene-based copolymer include copolymers of propylene and an $\alpha$-olefin having 4 to 10 carbon atoms, such as an ethylene-propylene copolymer, a butene-propylene copolymer, a hexene-propylene copolymer, and an ethylene-propylene-butene copolymer. These copolymers may be, for example, random copolymers or block copolymers, but are preferably random copolymers. The foam layer may contain one kind of the polypropylene-based resins or two or more kinds of the polypropylene-based resins.

Among these polypropylene-based resins, the thermoplastic resin constituting the foam layer is particularly preferably an ethylene-propylene random copolymer containing 0.5 mass% or more and 3.5 mass% or less of an ethylene component. The expanded bead having such a foam layer is excellent in secondary expandability and moldability. In addition, when in-mold molding is performed using such an expanded bead, it is possible to more easily obtain a molded article having excellent rigidity and surface properties and being capable of curtailing deformation and shrinkage even in a case where the aging process is omitted.

The content of the ethylene component contained in the ethylene-propylene random copolymer is preferably 0.5 mass% or more and less than 2.0 mass%, from the viewpoint of obtaining a molded article having more excellent rigidity and smaller deformation and shrinkage in a case where the aging process is omitted. On the other hand, the content of the ethylene component contained in the ethylene-propylene random copolymer is preferably 2.0 mass% or more and 3.5 mass% or less, from the viewpoint of enhancing the moldability of the expanded bead and obtaining a molded article excellent in energy absorption property.

Note that the above-described "ethylene component" and "propylene component" mean a structural unit derived from ethylene and a structural unit derived from propylene in the ethylene-propylene copolymer, respectively. The content of the ethylene component is a mass ratio of the ethylene component in a case where the total of the ethylene component and the propylene component is 100 mass%. The content of each component in the ethylene-propylene copolymer can be determined based on the result of IR spectrum measurement.

In a case where the foam layer is composed of a polypropylene-based resin, a melting point Tmc of the polypropylene-based resin is preferably 155°C or lower. In this case, it is possible to mold a molded article excellent in appearance and rigidity at a lower molding temperature (that is, at a low molding pressure). From the viewpoint of improving this effect, the melting point Tmc of the polypropylene-based resin constituting the foam layer is preferably 152°C or lower, and more preferably 148°C or lower. On the other hand, from the viewpoint of further improving the heat resistance, mechanical strength, and the like of the molded article, the melting point Tmc of the polypropylene-based resin constituting the foam layer is preferably 135°C or higher, more preferably 138°C or higher, and still more preferably 140°C or higher.

The melting point of the thermoplastic resin constituting the foam layer can be determined on the basis of a DSC curve obtained by performing differential scanning calorimetry (that is, DSC) in accordance with JIS K 7121-1987. Specifically, first, a test piece is conditioned in accordance with "(2) When the melting temperature is measured after a certain heat treatment". The conditioned test piece is heated from 30°C to 200°C at a heating rate of 10°C/min to obtain a DSC curve, and a peak temperature of the melting peak appearing in the DSC curve is defined as the melting point Tmc of the thermoplastic resin. Note that in a case where a plurality of melting peaks appear in the DSC curve, the peak temperature of the melting peak having the largest area is defined as the melting point Tmc.

In a case where the foam layer is composed of a polypropylene-based resin, a melt flow rate (that is, MFR) of the polypropylene-based resin is preferably 5 g/10 min or more, more preferably 6 g/10 min or more, and still more preferably 7 g/10 min or more. In this case, foamability and moldability can be further improved. On the other hand, from the viewpoint of further enhancing the rigidity of the molded article, the MFR of the polypropylene-based resin is preferably 12 g/10 min or less, and more preferably 10 g/10 min or less. Note that the MFR of the polypropylene-based resin is a value measured under conditions of a test temperature of 230°C and a load of 2.16 kg on the basis of JIS K 7210-1:2014.

In a case where the foam layer is composed of a polypropylene-based resin, a flexural modulus of the polypropylene-based resin is preferably 800 MPa or more and 1600 MPa or less. From the viewpoint of enhancing the rigidity of the molded article and from the viewpoint of more reliably avoiding the dimensional change in a case where the aging process is omitted, the flexural modulus of the polypropylene-based resin constituting the foam layer is preferably 800 MPa or more, more preferably 850 MPa or more, still more preferably 900 MPa or more, and particularly preferably 1200 MPa or more. On the other hand, from the viewpoint that a molded article excellent in appearance and rigidity can be molded at a lower molding temperature (that is, at a low molding pressure) and from the viewpoint of improving the energy absorption property of the molded article, the flexural modulus of the polypropylene-based resin constituting the foam layer is preferably less than 1200 MPa, more preferably 1100 MPa or less, and still more preferably 1000 MPa or less. Note that the flexural modulus of the polypropylene-based resin can be determined on the basis of JIS K 7171:2008.

Conventionally, particularly in a case where the expanded bead composed of a polypropylene-based resin having a flexural modulus of less than 1200 MPa is subjected to in-mold molding, there has been a tendency that the molded article after demolding is significantly shrunk and deformed when the aging process is omitted. As a cause of this, for example, it is conceivable that a resistance force against shrinkage and deformation after demolding is small. In contrast, according to the method for producing a molded article described above, for example, even in a case where the expanded bead composed of a polypropylene-based resin having a flexural modulus of less than 1200 MPa is used, the aging process can be omitted.

The expanded bead may have a multilayer structure including a foam layer and a thermoplastic resin cover layer covering the foam layer. **In** this case, the cover layer may cover the entire surface of the foam layer, or may cover a part of the foam layer, but preferably covers the entire side peripheral surface of the foam layer.

The cover layer described above has an action of improving fusion-bondability of the expanded bead. Whether or not the cover layer has such an action can be determined by the following method. First, expanded beads each including a foam layer and a cover layer are used, and in-mold molding is performed at various steam pressures. Each fusion-bonded rate of the molded articles thus obtained is measured. Then, the lowest value among steam pressures at which the molded article having a fusion-bonded rate of 90% or more is obtained is identified, and this value is defined as a minimum molding pressure P1.

Separately from this, the same evaluation is performed using an expanded bead composed of the material of the same kind as the foam layer of the multilayer-structured expanded bead which was used in the defining of the minimum molding pressure P1, the lowest value among steam pressures at which the molded article having a fusion-bonded rate of 90% or more is obtained is identified, and this value is defined as a minimum molding pressure P2. Then, in a case where the minimum molding pressure P1 of the expanded bead having the cover layer is less than the minimum molding pressure P2 of the expanded bead having no cover layer, it can be determined that the cover layer has an action of improving the fusion-bondability.

Note that a method for measuring the fusion-bonded rate of the molded article is as follows. First, the molded article is bent and broken to expose a fracture surface. The total number of expanded beads and the number of expanded beads that are broken inside the expanded beads (that is, expanded beads having material failure) on the fracture surface are counted. Then, a ratio of the number of expanded beads that are broken inside the expanded beads to the total number of expanded beads, which exist on the fracture surface, is calculated, and this value is defined as the fusion-bonded rate (unit: %).

The cover layer is preferably composed of a thermoplastic resin of which a melting point or a softening point is lower than a melting point of a thermoplastic resin constituting the foam layer. When the foam layer is covered with the cover layer composed of such a thermoplastic resin, the expanded beads can be fusion-bonded at a lower molding temperature (that is, at a low molding pressure) in in-mold molding. As a result, it is possible to more reliably avoid deformation and shrinkage of the molded article in a case where the aging process is omitted. From the abovementioned viewpoint, it is preferable to meet the relational expression of $Tmc - Tms \geqq 3$, more preferable to meet $Tmc - Tms \geqq 5$, and still more preferable to meet $Tmc-Tms \geqq 8$. From the viewpoint of curtailing peeling between the foam layer and the cover layer, and mutual adhesion between the expanded beads in the course of production thereof, it is preferable to meet the relational expression of $Tmc - Tms \leqq 35$, more preferable to meet $Tmc - Tms \leqq 20$, and still more preferable to meet $Tmc - Tms \leqq 15$.

The thermoplastic resin constituting the cover layer may be a crystalline thermoplastic resin or an amorphous thermoplastic resin. As the crystalline thermoplastic resin used for the cover layer, for example, the same crystalline thermoplastic resin as the crystalline thermoplastic resin used for the foam layer can be used. Examples of the amorphous thermoplastic resin used for the cover layer include a polystyrene-based resin and an amorphous polyester-based resin.

In a case where the foam layer is composed of a polypropylene-based resin, the cover layer is preferably composed of a polyolefin-based resin, more preferably composed of one kind or more selected from the group consisting of a polyethylene-based resin and a polypropylene-based resin, and still more preferably composed of a polypropylene-based resin, from the viewpoint of adhesiveness to the foam layer. Examples of the polypropylene-based resin used for the cover layer include an ethylene-propylene copolymer, a butene-propylene copolymer, an ethylene-propylene-butene copolymer, and a propylene homopolymer. Among them, the thermoplastic resin constituting the cover layer is particularly preferably one kind or more selected from the group consisting of an ethylene-propylene copolymer and an ethylene-propylene-butene copolymer.

The cover layer may contain an additive such as a crystal nucleating agent, a flame retardant, a flame retardant aid, a plasticizer, an antistatic agent, an antioxidant, an ultraviolet inhibitor, a light stabilizer, a conductive filler, an antibacterial agent, or a colorant as long as the above-described action and effect are not impaired. The content of the additive in the cover layer is preferably, for example, 0.01 parts by mass or more and 10 parts by mass or less with respect to 100 parts by mass of the thermoplastic resin.

The cover layer of the expanded bead may be in a foamed state or a non-foamed state, but is preferably in a substantially non-foamed state. The "substantially non-foamed state" herein refers to a state in which almost no cell structure is present, including a case where cells are not present at all and a case where cells once formed have been completely melt-fractured. The thickness of the cover layer is, for example, 0.5 $\mu$m or more and 100 $\mu$m or less. In addition, an intermediate layer may be further provided between the foam layer and the cover layer.

A mass ratio (ratio of mass%) of the resin constituting the foam layer to the resin constituting the cover layer is preferably foam layer : cover layer = 99.5 : 0.5 to 80 : 20, more preferably 99 : 1 to 85 : 15, and still more preferably 97 : 3 to 88 : 12, from the viewpoint of enhancing the moldability while maintaining the rigidity of the molded article.

A closed cell content of the expanded bead is preferably 90% or more, more preferably 92% or more, and still more preferably 95% or more, from the viewpoint of improving the moldability of the expanded bead and further improving the rigidity of the molded article.

The closed cell content of the expanded bead can be measured using an air-comparison pycnometer on the basis of ASTM-D 2856-70 Procedure C. Specifically, measurement is performed as follows. First, the expanded beads are left to stand for 24 hours or longer in an environment of a relative humidity of 50%, a temperature of 23°C, and an atmospheric pressure of 1 atm to condition the expanded beads. A measurement samples is collected in such a manner that a value of a marked line of a measuring cylinder when the expanded beads after the conditioning are naturally deposited in the measuring cylinder is about 20 cm$^3$. The measurement sample is immersed in a measuring cylinder containing ethanol at a temperature of 23°C, and an apparent volume of the measurement sample is measured on the basis of an amount of increase in the liquid level.

After the measurement sample whose apparent volume has been measured is sufficiently dried, a true volume value of the measurement sample measured by AccuPyc II 1340 manufactured by Shimadzu Corporation is measured in accordance with Procedure C described in ASTM-D 2856-70. Then, using these volume values, the closed cell content (unit: %) of the measurement sample is calculated on the basis of the following equation (1).

$$\text{Closed cell content} = (\text{Vx} - \text{W}/\rho) \times 100/(\text{Va} - \text{W}/\rho) \cdots (1)$$

Vx (unit: cm$^3$) in the above equation (1) is a true volume (that is, a sum of a volume of the resin constituting the expanded bead and a total cell volume of closed cell portions in the expanded bead) of the expanded bead, Va (unit: cm$^3$) is an apparent volume (that is, a volume measured from an increase in the liquid level when the expanded bead is immersed in a measuring cylinder containing ethanol) of the expanded bead, W (unit: g) is a mass of the measurement sample, and $\rho$ (unit: g/cm$^3$) is a density of the thermoplastic resin constituting the foam layer.

The above operation is performed five times using different measurement samples, and the arithmetic average value of the closed cell contents obtained by these five measurements is defined as the closed cell content of the expanded bead.

In a case where the thermoplastic resin constituting the foam layer is a crystalline thermoplastic resin, the expanded bead preferably has a crystal structure in which an endothermic peak due to melting inherent to the crystalline thermoplastic resin constituting the foam layer and one or more melting peaks located on a higher temperature side than the endothermic peak appear in a DSC curve obtained when heated from 23°C to 200°C at a heating rate of 10°C/min. The expanded bead having such a crystal structure has excellent mechanical strength and excellent moldability. Note that hereinafter, the endothermic peak due to melting inherent to the crystalline thermoplastic resin appearing in the DSC curve is referred to as a "resin intrinsic peak", and a melting peak appearing on a higher temperature side than the resin intrinsic peak is referred to as a "high-temperature peak". The resin intrinsic peak is generated by endotherm when the crystal originally possessed by the crystalline thermoplastic resin constituting the foam layer melts. On the other hand, it is presumed that the high-temperature peak is generated by melting of secondary crystals formed in the crystalline thermoplastic resin constituting the foam layer in the process of producing the expanded bead. That is, in a case where a high-temperature peak appears in the DSC curve, it is estimated that secondary crystals are formed in the crystalline thermoplastic resin.

Whether or not the expanded bead has the above-described crystal structure only needs to be determined on the basis of a DSC curve obtained by performing differential scanning calorimetry (DSC) under the above-described conditions in accordance with JIS K 7121:1987. In performing DSC, 1 to 3 mg of the expanded beads is only required to be used as a sample.

Specifically, in the DSC curve obtained when heating from 23°C to 200°C (that is, first heating) is performed at a heating rate of 10°C/min as described above, both a high-temperature peak and a resin intrinsic peak of the crystalline thermoplastic resin constituting the foam layer appear. On the other hand, in the DSC curve obtained by performing the first heating, then cooling from 200°C to 23°C at a cooling rate of 10°C/min, and then heating from 23°C to 200°C again at a heating rate of 10°C/min (that is, second heating), only the resin intrinsic peak of the crystalline thermoplastic resin constituting the foam layer appears. Thus, when the DSC curve obtained at the time of the first heating is compared with the DSC curve obtained at the time of the second heating, the resin intrinsic peak and the high-temperature peak can be distinguished. The peak temperature of the resin intrinsic peak may be slightly different between the first heating and the second heating, but the difference is usually within 5°C.

A heat quantity of melting at the high-temperature peak of the expanded bead is preferably 5 J/g or more and 40 J/g or less, more preferably 7 J/g or more and 30 J/g or less, and still more preferably 10 J/g or more and 20 J/g or less from the viewpoint of further improving the moldability of the expanded bead and obtaining a molded article having more excellent rigidity.

The heat of fusion of the high-temperature peak described above is a value obtained as follows. First, the expanded bead is left to stand for 24 hours under conditions of a relative humidity of 50%, 23°C, and 1 atm to condition the expanded bead. Using 1 to 3 mg of the conditioned expanded bead as a sample, differential scanning calorimetry is performed under the condition of heating from 23°C to 200°C at a heating rate of 10°C/min to obtain a DSC curve. FIG. 3 shows an example of the DSC curve. When the expanded bead has a high-temperature peak, as shown in FIG. 3, a resin intrinsic peak $\Delta H1$ and a high-temperature peak $\Delta H2$ having an apex on a higher temperature side than an apex of the resin intrinsic peak $\Delta H1$ appear in the DSC curve.

Next, a straight line L1 connecting a point $\alpha$ corresponding to 80°C on the DSC curve and a point $\beta$ corresponding to a melting end temperature T of the expanded bead is drawn. Note that the melting end temperature T is an end point on the high temperature side in the high-temperature peak $\Delta H2$, that is, an intersection of the high-temperature peak $\Delta H2$ and a baseline on the higher temperature side than the high-temperature peak $\Delta H2$ in the DSC curve.

After the straight line L1 is drawn, a straight line L2 that passes through a maximum point $\gamma$ existing between the resin intrinsic peak $\Delta H1$ and the high-temperature peak $\Delta H2$ and is parallel to the vertical axis of the graph is drawn. The straight line L2 divides the resin intrinsic peak $\Delta H1$ and the high-temperature peak $\Delta H2$. An endothermic amount of the high-temperature peak ΔH2 can be calculated on the basis of an area of a portion surrounded by a portion constituting the high-temperature peak ΔH2 in the DSC curve, the straight line L1, and the straight line L2.

Method for producing expanded bead

The expanded bead can be produced, for example, by a method in which thermoplastic resin beads (hereinafter, referred to as "resin bead") containing a thermoplastic resin are dispersed in a dispersion medium, the resin beads are impregnated with a blowing agent, and then the resin beads containing the blowing agent are released together with the dispersion medium under a low pressure. Note that such an expanding method is sometimes referred to as a "direct expanding method".

The resin bead can be produced by, for example, a strand cutting method. In the strand cutting method, first, a thermoplastic resin constituting the foam layer and an additive such as a cell nucleating agent supplied as necessary are supplied into an extruder, and heated and kneaded to obtain a resin melt-kneaded product. Thereafter, the resin melt-kneaded product is extruded from a small hole of a die attached to the tip of the extruder to form a columnar extruded product having a plurality of through-holes. After the extruded product is cooled, the extruded product is cut into a desired length to obtain resin bead having a single layer structure including a core layer containing the thermoplastic resin and having a plurality of through-holes.

For obtaining an expanded bead having a multilayer structure including a foam layer and a cover layer covering the foam layer, a coextrusion apparatus including an extruder for forming a core layer, an extruder for forming a cover layer, and a coextrusion die connected to these two extruders is only required to be used to prepare resin bead having a multilayer structure. In this case, in the extruder for forming a core layer, the thermoplastic resin constituting the foam layer and an additive or the like added as necessary are melt-kneaded to prepare a core layer forming resin melt-kneaded product. In addition, in the extruder for forming a cover layer, a thermoplastic resin constituting the cover layer and an additive or the like added as necessary are melt-kneaded to prepare a cover layer forming resin melt-kneaded product.

These melt-kneaded products are co-extruded and joined in the die to form a composite having a multilayer structure including a columnar core layer in a non-foamed state and a cover layer in a non-foamed state covering an outer surface of the core layer. The composite is extruded from the small hole of the die to form a columnar extruded product having a plurality of through-holes in the core layer. After the extruded product is cooled, the extruded product is cut into a desired length to obtain resin bead having a multilayer structure including a core layer having a plurality of through-holes. Note that the method for producing the resin bead is not limited to the method described above, and a hot cutting method, an underwater cutting method, or the like may be employed.

In producing the resin bead, it is preferable to employ a strand cutting method in which a columnar extruded product is cooled in water and then cut. **In** this case, an accuracy of the shape of the resin bead can be further improved, and shapes of the plurality of through-holes in the finally obtained expanded bead can be more easily formed into a desired shape.

A particle size of the resin bead is preferably 0.1 mm or more and 3.0 mm or less, and more preferably 0.3 mm or more and 1.5 mm or less.

A mass per one resin bead is preferably 0.1 mg or more and 20 mg or less, more preferably 0.2 mg or more and 10 mg or less, still more preferably 0.3 mg or more and 5 mg or less, and particularly preferably 0.4 mg or more and 2 mg or less. Note that the mass per one resin bead is a value obtained by dividing a mass of 200 randomly selected resin beads by the number of resin beads. The mass per one resin bead obtained by the method described above may be referred to as "average mass per one resin bead".

In a case where the resin bead has a core layer and a cover layer, a mass ratio of the core layer to the cover layer is preferably core layer : cover layer = 99.5 : 0.5 to 80 : 20, more preferably 99 : 1 to 85 : 15, and still more preferably 97 : 3 to 90 : 12.

In forming the expanded bead having through-holes, the hole diameter d of the through-hole of the expanded bead can be adjusted to fall within the above-described specific range by adjusting the hole diameter dr of the through-hole of the core layer in the resin bead described below. More specifically, when the hole diameter dr of the through-hole of the resin bead is set to 0.03 mm or more and less than 0.15 mm, and preferably 0.05 mm or more and less than 0.1 mm, it is possible to easily produce the expanded bead having a hole diameter d of the through-hole of 0.1 mm or more and less than 0.5 mm. The hole diameter dr of the through-hole of the core layer of the resin bead can be adjusted by, for example, a hole diameter (that is, an inner diameter of the die) of a small hole of a die for forming the through-hole.

A method for calculating the hole diameter dr of the through-hole of the resin bead is the same as the method for calculating the hole diameter d of the through-hole of the expanded bead described above except that the resin bead is used instead of the expanded bead. Note that the hole diameter dr of the through-hole of the resin bead obtained by the above-described method may be referred to as an "average hole diameter dr of the through-holes of the resin bead".

Note that in a case where the strand cutting method, that is, a method in which a cylindrical extruded product extruded from a die is cooled in water while being taken up and then cut to an appropriate length is adopted for cutting the extruded product, the particle diameter, length/outer diameter ratio, and mass per one bead of the resin bead can be adjusted by appropriately changing an extrusion speed, a take-up speed, a cutter speed, and the like during extrusion of the resin melt-kneaded product to cut the resin melt-kneaded product.

After preparing the resin beads as described above, the resin beads are dispersed in a dispersion medium. The operation of dispersing the resin beads in the dispersion medium may be performed in a sealed container used in an expanding process to be performed later, or may be performed in a container different from the sealed container used in the expanding process. From the viewpoint of simplification of the production process, it is preferable to perform the dispersion process in the sealed container used in the expanding process.

As the dispersion medium, an aqueous dispersion medium containing water as a main component is used. In addition to water, the aqueous dispersion medium may contain a hydrophilic organic solvent such as ethylene glycol, glycerin, methanol, or ethanol. A proportion of water in the aqueous dispersion medium is preferably 60 mass% or more, more preferably 70 mass% or more, and still more preferably 80 mass% or more.

It is preferable to add a dispersant to the dispersion medium. When the dispersant is added to the dispersion medium, fusion between the resin beads heated in the container can be curtailed in the expanding process. An addition amount of the dispersant is preferably 0.001 parts by mass or more and 5 parts by mass or less per 100 parts by mass of the resin beads. As the dispersant, an organic dispersant or an inorganic dispersant can be used, but it is preferable to use a fine grained inorganic substance as the dispersant from the viewpoint of ease of handling. More specifically, as the dispersant, for example, a clay mineral such as amsnite, kaolin, mica, or clay, aluminum oxide, titanium oxide, basic magnesium carbonate, basic zinc carbonate, calcium carbonate, iron oxide, or the like can be used. These dispersants may be used alone, or two or more kinds of dispersants may be used in combination. Among them, a clay mineral is preferably used as the dispersant. The clay mineral may be natural or synthetic.

In a case where the dispersant is used, an anionic surfactant such as sodium dodecylbenzenesulfonate, sodium alkylbenzenesulfonate, sodium lauryl sulfate, or sodium oleate is preferably used in combination as a dispersion aid. An addition amount of the dispersion aid is preferably 0.001 parts by mass or more and 1 part by mass or less per 100 parts by mass of the resin bead.

After the resin beads are dispersed in the dispersion medium, the resin beads are impregnated with a blowing agent in a sealed container. The blowing agent to be impregnated into the resin beads is preferably a physical blowing agent. Examples of the physical blowing agent include inorganic physical blowing agents such as carbon dioxide, air, nitrogen, helium, and argon, and organic physical blowing agents such as aliphatic hydrocarbons such as propane, butane, and hexane, cyclic aliphatic hydrocarbons such as cyclopentane and cyclohexane, and halogenated hydrocarbons such as 1,3,3,3-tetrafluoropropene, 1-chloro-3,3,3-trifluoropropene, chlorofluoromethane, trifluoromethane, 1,1-difluoromethane, 1-chloro-1,1-dichloroethane, 1,2,2,2-tetrafluoroethane, methyl chloride, ethyl chloride, and methylene chloride. These physical blowing agents may be used alone, or two or more kinds thereof may be used in combination. In addition, the inorganic physical blowing agent and the organic physical blowing agent may be mixed and used. From the viewpoint of environmental load and handleability, the inorganic physical blowing agent is preferably used, and carbon dioxide is more preferably used.

An addition amount of the blowing agent with respect to 100 parts by mass of the resin bead is preferably 0.1 parts by mass or more and 30 parts by mass or less, and more preferably 0.5 parts by mass or more and 15 parts by mass or less.

As a method for impregnating the resin beads with the blowing agent in the process of producing expanded beads, a method can be adopted in which an blowing agent is supplied into a sealed container, and a pressure in the sealed container is increased to impregnate resin beads in a dispersion medium with the blowing agent. At **this time,** when the resin beads are heated together with the dispersion medium, impregnation of the resin beads with the blowing agent can be further promoted.

The pressure in the sealed container during expanding is preferably 0.5 MPa (G) or more in gauge pressure. On the other hand, the pressure in the sealed container is preferably 4.0 MPa (G) or less in gauge pressure. Within the above range, the expanded bead can be produced safely without the risk of breakage, explosion, or the like of the sealed container.

In a case where the dispersion medium is heated, the temperature of the dispersion medium is raised at 1 to 5°C/min, so that a temperature at the time of expanding can also be in an appropriate range.

After the impregnation of the resin beads with the blowing agent is completed, the contents of the sealed container are released to a lower pressure environment than the sealed container. As a result, the core layer of each of the resin bead is foamed to form a cell structure, and the cell structure is stabilized by being cooled by the outside air, thereby obtaining expanded bead.

In a case where the core layer is composed of a polypropylene-based resin, it is preferable to perform heating and expanding in the following manner when impregnating the resin bead with the blowing agent. That is, first, a first-step holding process of holding at a temperature of (the melting point of the polypropylene-based resin - 20°C) or higher and lower than (the melting end temperature of the polypropylene-based resin) for a sufficient time, preferably about 10 to 60 minutes is performed, and then the temperature is adjusted to a temperature from (the melting point of the polypropylene-based resin - 15°C) to lower than (the melting end temperature of the polypropylene-based resin + 10°C). Then, if necessary, a second-step holding step of holding at that temperature for a more sufficient time, preferably about 10 to 60 minutes is performed. Thereafter, it is preferable that the content of the sealed container is released to the outside in a state where the temperature in the sealed container is set to (the melting point of the polypropylene-based resin - 10°C) or higher to expand the resin bead. The temperature in the sealed container during expanding is more preferably (the melting point of the polypropylene-based resin) or higher and (the melting point of the polypropylene resin + 20°C) or lower. When the resin bead is heated to be expanded in this manner, secondary crystals are formed in the polypropylene-based resin constituting the foam layer, so that expanded bead having excellent mechanical strength and excellent moldability can be easily obtained.

In the preparation of the molded article, the expanded beads obtained as described above may be used as they are. In addition, the expanded beads obtained by the direct expanding method described above can be further expanded to prepare a molded article using the expanded beads having a reduced apparent density. Note that in a case where the resin bead is expanded in two steps as described above, an expanding process in the first step is referred to as a first-step expanding process, and the expanded bead obtained in the first-step expanding process are referred to as first-step expanded bead. An expanding process in the second step is referred to as a second-step expanding process. The expanded bead obtained by the second-step expanding process are sometimes referred to as second-step expanded bead.

A method for reducing the apparent density of the expanded bead by the second-step expanding is, for example, as follows. First, as the first-step expanding process, the resin bead is expanded by the direct expanding method described above to obtain first-step expanded bead. Thereafter, an internal pressure is applied to the first-step expanded bead. More specifically, the first-step expanded bead is placed in a pressure-resistant container, and then the inside of the pressure-resistant container is pressurized with an inorganic gas such as air or carbon dioxide to impregnate the expanded bead with the inorganic gas. As a result, the pressure in cells of the first-step expanded bead is made equal to or higher than the atmospheric pressure. Thereafter, the first-step expanded bead taken out from the pressure-resistant container are heated using a heating medium such as steam or heated air under an environment of a pressure lower than the pressure in the cells to subject the first-step expanded bead to second-step expanding.

Molded article of expanded beads

A molded article of expanded beads can be obtained by in-mold molding of the expanded beads. The molded article has an open cell structure. The open cell structure is a minute space portion communicating with the outside of the molded article. The open cell structure is formed by complicatedly connecting voids formed by allowing through-holes of a plurality of expanded beads to communicate with each other, voids formed by allowing the through-holes of the expanded beads to communicate with gaps between the expanded beads, voids formed by allowing gaps between the expanded beads to communicate with each other, open cells formed by destruction of closed cells of the expanded beads constituting the molded article, and the like.

An open cell content of the molded article is preferably 2% or more and 12% or less. When the open cell content of the molded article is set within the above-described specific range, even when the aging process is omitted, significant shrinkage, deformation, and the like of the molded article can be curtailed, and the appearance and rigidity of the molded article can be improved. This is considered to be because when the molded article has the open cell structure at the specific rate described above, air quickly flows into the cells in the molded article after demolding, and the internal pressure of the entire molded article is increased, so that the dimensions of the molded article are likely to be stabilized early.

In a case where the open cell content of the molded article is excessively low, when the aging process is omitted, the molded article may be significantly shrunk and deformed, so that a molded article having a desired shape may not be obtained. From the viewpoint that significant shrinkage, deformation, and the like of the molded article can be further curtailed even when the aging process is omitted, the open cell content of the molded article is preferably 2% or more, more preferably 2.5% or more, still more preferably 3% or more, and particularly preferably 4% or more. On the other hand, when the open cell content of the molded article is excessively high, the appearance of the molded article may be deteriorated and the rigidity may be deteriorated. In addition, water leakage prevention performance may be insufficient depending on the application. From the viewpoint that the appearance, rigidity, and water leakage prevention property of the molded article can be further improved, the open cell content of the molded article is preferably 12% or less, more preferably 10% or less, still more preferably 8% or less, particularly preferably 7.5% or less, and most preferably 6% or less.

The open cell content of the molded article is measured in accordance with ASTM 2856-70 Procedure B. Specifically, first, the molded article is conditioned by leaving the molded article to stand at a temperature of 23°C for 12 hours. Next, a cubic first test piece of 2.5 cm long $\times$ 2.5 cm wide $\times$ 2.5 cm high is cut out from a central portion of the molded article, and its geometric volume $V_a$ (unit: cm$^3$), that is, the product of the length dimension (unit: cm), the width dimension (unit: cm), and the height dimension (unit: cm) is calculated. Next, a true volume $V_1$ (unit: cm$^3$) of the first test piece is measured using a dry automatic densitometer (specifically, AccuPyc II 1340 manufactured by Shimadzu Corporation).

Thereafter, the first test piece is divided into 8 equal parts to prepare second test pieces each having a cubic shape of 1.25 cm long × 1.25 cm wide × 1.25 cm high, and a true volume V2 (unit: cm$^3$) of the second test pieces is measured by a dry automatic densitometer. Note that the true volume V2 of the second test pieces is the total of the true volumes of the eight test pieces cut out from the first test piece.

The open cell content (unit: %) of the first test piece is expressed by the following equation (2) using the geometric volume Va of the first test piece, the true volume V1 of the first test piece, and the true volume V2 of the second test pieces obtained as described above. Note that the open cell content measured in this manner is a value obtained by correcting the influence of closed cells broken when the second test pieces are cut out from the first test piece, and is also referred to as a corrected open cell content.

$$\text{Open cell content} = (Va - 2V1 + V2) \times 100/Va \cdots (2)$$

The above operation is performed on five first test pieces, and the open cell content of each first test piece is calculated. The arithmetic average value of the open cell contents of the five first test pieces is defined as an open cell content Co of the molded article.

Note that the open cell content Co in the present specification is a physical property value measured in accordance with ASTM 2856-70 Procedure B as described above, and is a physical property value having a concept different from that of a voidage of the molded article. The voidage of the molded article is measured, for example, as follows. Specifically, first, a test piece having a rectangular parallelepiped shape (for example, 20 mm long × 100 mm wide × 20 mm high) is cut out from the central portion of the molded article. Next, the test piece is immersed in a measuring cylinder containing ethanol, and a true volume Vc (unit: L) of the test piece is determined from the increase in the liquid level of ethanol. In addition, an apparent volume Vd (unit: L) is obtained from the outer dimension of the test piece. The voidage (unit: %) of the molded article is expressed by the following equation (3) using the true volume Vc and the apparent volume Vd of the test piece obtained as described above.

$$\text{Voidage} = [(Vd - Vc)/Vd] \times 100 \cdots (3)$$

In measurement of the voidage of the molded article, closed cells broken when the test piece is cut out are not considered. In addition, the method is different from the method for measuring the open cell content Co in that a liquid such as ethanol is used as a medium for measurement. Thus, it is also difficult to estimate the value of the open cell content Co on the basis of the value of the voidage of the molded article. Note that the voidage of the molded article is always larger than the open cell content Co.

From the viewpoint that the dimensional change can be further sufficiently avoided even when the aging process is omitted, the voidage of the molded article is preferably 4% or more, more preferably 4.5% or more, and still more preferably 5% or more. On the other hand, from the viewpoint of further improving the rigidity and the appearance, the voidage of the molded article is preferably 12% or less, and more preferably 10% or less. The voidage of the molded article can be measured by the above-described measurement method.

A density of the molded article is preferably 10 kg/m$^3$ or more and 60 kg/m$^3$ or less. **In** this case, the lightweight property and the rigidity of the molded article can be improved in a well-balanced manner. From the viewpoint of further improving the rigidity of the molded article, the density of the molded article is more preferably 15 kg/m$^3$ or more, and still more preferably 20 kg/m$^3$ or more. From the viewpoint of further improving the lightweight property, the density of the molded article is more preferably 50 kg/m$^3$ or less, and still more preferably 45 kg/m$^3$ or less. The density of the molded article is calculated by dividing the mass (unit: g) of the molded article by the volume (unit: L) obtained from the outer dimension of the molded article and performing unit conversion. Note that for example, in a case where the molded article has a complicated shape at least partially, and it is not easy to determine the volume from the outer dimension of the molded article, the volume of the molded article can be determined by a submersion method.

Conventionally, in a case where a molded article having a small density is produced, the molded article is likely to be significantly deformed after demolding, and it is particularly difficult to omit the aging process. **In** contrast, in production of the expanded beads molded article, even having a small density, the aging step can be omitted from the production process, and the expanded beads molded article thus obtained has a desired shape and is excellent in appearance and rigidity even without aging. From the viewpoint of effectively exhibiting this effect, the density of the molded article is preferably set to the above range.

The molded article is also used as, for example, a sound absorbing material, an impact absorbing material, a cushioning material, and the like in various fields such as a vehicle field including an automobile and a building field.

Method for producing molded article of expanded beads

**In** preparing the molded article of expanded beads, for example, the expanded beads may be filled in a mold, and then steam as a heating medium only needs to be supplied into the mold to perform in-mold molding. Specifically, first, expanded beads are filled in a mold having a cavity corresponding to a desired shape of a molded article. After the filling of the expanded beads is completed, steam is supplied into the mold to heat the expanded beads. The expanded beads in the mold are heated by steam and fusion-bonded to each other while being secondarily expanded. This can integrate the expanded beads in the mold to form a molded article.

After the supplying of the steam is completed, the molded article in the mold is cooled to stabilize its shape. Thereafter, the molded article is taken out from the mold, whereby the in-mold molding is completed. In the production method, as necessary, an aging process of leaving the molded article after demolding to stand for a predetermined time in a high-temperature atmosphere adjusted to a temperature of, for example, about 60°C to 80°C may be performed, but shrinkage and deformation of the molded article can be curtailed even in a case where the aging process in the high-temperature atmosphere is not performed on the molded article after demolding. In a case where the aging process is omitted, for example, the shape of the molded article can be stabilized by leaving the molded article after demolding to stand in an environment of, for example, 23°C for 12 hours.

In the production method, the open cell content of the molded article can be easily adjusted to fall within the range of 2% or more and 12% or less by in-mold molding of the specific expanded beads. In a case where the expanded beads have no through-hole, it is difficult to set the value of the open cell content of the molded article to 2% or more.

Further, the open cell content of the molded article tends to increase as the ratio Ct/A of the total cross-sectional area Ct of the through-holes to the cross-sectional area A of the expanded beads in the expanded beads increases. Thus, in a case where the ratio Ct/A is too small, the open cell content tends to be less than 2%, and in a case where the ratio Ct/A is too large, the open cell content tends to be higher than 12%.

EXAMPLES

Examples of the expanded beads, the expanded bead-molded article, and the method for producing the same will be described.

Polypropylene-based resin

Table 1 shows properties and the like of the polypropylene-based resin used for producing the expanded beads. Note that the ethylene-propylene copolymer and the ethylene-propylene-butene copolymer used in this example are both random copolymers. A density of each of PP1 and PP2 shown in Table 1 is 900 kg/m$^3$.

[Table 1]

(Table 1)

| Symbol | Material | Catalytic Agent | Comonomer | Flexural Modulus (MPa) | Melting Point (°C) | MFR (g/10min) |
|---|---|---|---|---|---|---|
| PP1 | Ethylene-propylene Random Copolymer | Ziegler-Natta | Ethylene 3.1 mass% | 980 | 142 | 8 |
| PP2 | Ethylene-propylene-butene Random Copolymer | Ziegler-Natta | Ethylene 3.8 mass% Butene 4.5 mass% | 770 | 134 | 6 |

Monomer component content of polypropylene-based resin

A monomer component content of the polypropylene-based resin (specifically, ethylene-propylene copolymer and ethylene-propylene-butene copolymer) was determined by a known method making determination by IR spectrum. Specifically, the monomer component content was determined by the method described in Polymer Analysis Handbook (Polymer Analysis Research Council, Japan Society for Analytical Chemistry, edition, publication month and year: January 1995, publishing company: Kinokuniya, page number and item name: 615-616 "II.2.3 2.3.4 Propylene/ethylene copolymer", 618-619 "II.2.3 2.3.5 Propylene/butene copolymer"), that is, the method of performing quantification from a relationship of a value obtained by correcting absorbance of ethylene and butene with a predetermined coefficient, a thickness of a film-shaped test piece, and the like.

More specifically, first, the polypropylene-based resin was hot-pressed in an environment at 180°C to be formed into a film shape, thereby preparing a plurality of test pieces having different thicknesses. Next, absorbances at 722 cm$^{-1}$ and 733 cm$^{-1}$ derived from ethylene ($A_{722}$, $A_{733}$) and an absorbance at 766 cm$^{-1}$ derived from butene ($A_{766}$) were read by measuring an IR spectrum of each test piece. Next, for each test piece, the ethylene component content (unit: mass%) in the polypropylene-based resin was calculated using the following equations (4) to (6). An arithmetic average value of the ethylene component contents obtained for the test pieces was defined as the ethylene component content (unit: mass%) in the polypropylene-based resin.

$$(K'_{733})_c = 1/0.96\{(K'_{733})_a - 0.268(K'_{722})_a\} \cdots (4)$$

$$(K'_{722})_c = 1/0.96\{(K'_{722})_a - 0.150(K'_{733})_a\} \cdots (5)$$

$$\text{Ethylene component content} = 0.575\{(K'_{722})_c + (K'_{733})_c\} \cdots (6)$$

$K'_a$ in the equations (4) to (6) is an apparent absorption coefficient ($K'_a = A/\rho t$) at each wave number, $K'_c$ is a corrected absorption coefficient, A is absorbance, $\rho$ is a density (unit: g/cm$^3$) of the resin, and t is a thickness (unit: cm) of the film-shaped test piece. Note that the above equations (4) to (6) can be applied to random copolymers.

Furthermore, for each test piece, a butene component content in the polypropylene-based resin was calculated using the following equation (7). An arithmetic average value of the butene component contents obtained for the test pieces was defined as the butene component content (unit: mass%) in the polypropylene-based resin.

$$\text{Butene component content} = 12.3(A_{766}/L) \cdots (7)$$

In the equation (7), A is absorbance, and L is a thickness (unit: mm) of the film-shaped test piece.

Flexural modulus of polypropylene-based resin

The polypropylene-based resin was hot-pressed at 230°C to prepare a 4 mm sheet, and a test piece having a length of 80 mm × a width of 10 mm × a thickness of 4 mm was cut out from the sheet. The flexural modulus of this test piece was determined in accordance with JIS K 7171:2008. Note that a radius of an indenter and a radius of a support base are both 5 mm, an inter-fulcrum distance is 64 mm, and a test speed is 2 mm/min.

Melting point of polypropylene-based resin

A melting point of the polypropylene-based resin was determined in accordance with JIS K 7121:1987. Specifically, first, a test piece composed of a polypropylene-based resin was conditioned on the basis of "(2) When the melting temperature is measured after a certain heat treatment" described in JIS K 7121:1987. The conditioning was performed at heating and cooling rates of 10°C/min. The test piece after the conditioning was heated from 30°C to 200°C at a heating rate of 10°C/min to obtain a DSC curve. Then, a peak temperature of a melting peak appearing in the DSC curve was defined as the melting point. Note that as a measuring apparatus, a heat flux differential scanning calorimeter (manufactured by SII NanoTechnology Inc., model number: DSC 7020) was used.

Melt flow rate of polypropylene-based resin

A melt flow rate (that is, MFR) of the polypropylene-based resin was measured under conditions of a temperature of 230°C and a load of 2.16 kg in accordance with JIS K 7210-1:2014.

Next, the configuration and production method of the expanded beads used in the present examples will be described.

Example 1

As illustrated in FIGS. 4 and 5, the expanded bead 1 of Example 1 has a columnar shape, and has five through-holes 11 penetrating the inside thereof in the axial direction. One through-hole 11a of the five through-holes 11 (11a to 11e) is provided to penetrate the central axis 10 of the expanded bead 1. Further, the remaining four through-holes 11b to 11e are arranged around the central axis 10 at positions where intervals in the circumferential direction in a cut surface obtained by cutting the expanded bead 1 along a plane perpendicular to the axial direction at the center in the axial direction of the expanded bead are approximately equal.

As shown in FIG. 5 and Table 2, the expanded bead 1 of Example 1 has a multilayer structure including a foam layer 2 made of PP1 and a cover layer 3 in a non-foamed state, made of PP2 and covering the foam layer 2.

In preparing the expanded bead of the present example, first, a coextrusion apparatus including an extruder for forming a core layer, an extruder for forming a cover layer, and a coextrusion die connected to these two extruders was used, and an extruded product extruded from the coextrusion apparatus was cut by a strand cutting method to prepare multilayer resin beads. Specifically, in the extruder for forming a core layer, PP1 and zinc borate as a cell adjusting agent were melt-kneaded to obtain a core layer forming resin melt-kneaded product. Note that the highest set temperature in the extruder for forming a core layer was 245°C, and a blending amount of zinc borate was 500 ppm by mass with respect to the mass of the polypropylene-based resin. In parallel with this, PP2 was melt-kneaded at the highest set temperature of 245°C in the extruder for forming a cover layer to obtain a cover layer forming resin melt-kneaded product.

These melt-kneaded products were co-extruded and joined in the die to form a composite including a core layer in a non-foamed state and a cover layer in a non-foamed state covering a side peripheral surface of the core layer. After this composite was extruded from the die, the extruded product was cooled in water while being taken up, and cut to an appropriate length using a pelletizer to obtain multilayer resin beads including a core layer and a cover layer covering the side peripheral surface of the core layer, and having five through-holes formed in the core layer. A mass ratio between the core layer and the cover layer in the multilayer resin bead was set to core layer: cover layer = 95 : 5 (that is, the mass ratio of the cover layer is 5%). The mass per one multilayer resin bead was about 1.5 mg.

Next, the multilayer resin beads were foamed by a direct expanding method to obtain expanded beads. Specifically, 1 kg of multilayer resin beads was put into a 5 L sealed container together with 3 L of water as a dispersion medium. Next, 0.3 parts by mass of a dispersant and 0.004 parts by mass of a dispersion aid were added to 100 parts by mass of the multilayer resin beads in the sealed container, and the multilayer resin beads were dispersed in the dispersion medium. Kaolin was used as the dispersant. A surfactant (sodium alkylbenzene sulfonate) was used as the dispersion aid.

Thereafter, carbon dioxide as an blowing agent was added into the sealed container, the sealed container was then sealed, and the inside of the sealed container was heated to a temperature described in the column of "Expanding temperature" in Table 1 while being stirred. The pressure in the container (also referred to as impregnation pressure or carbon dioxide pressure) at this time was a value shown in the column of "Pressure in container" in Table 1. After the above-mentioned expanding temperature was maintained for 15 minutes, the sealed container was opened to release the contents to atmospheric pressure, thereby obtaining expanded beads 1 including a foam layer 2 formed by expanding the core layer and a cover layer 3 in a non-foamed state covering the foam layer 2.

Next, the apparent density of the first-step expanded beads was reduced by performing the second-step expanding process. Specifically, the first-step expanded beads were placed in a pressure-resistant container (specifically, a metal drum), and air was supplied into the pressure-resistant container to increase the pressure in the container, thereby impregnating the cells with the air. The internal pressure of the cells of the first-step expanded beads taken out from the pressure-resistant container was as shown in Table 2. Thereafter, the first-step expanded beads were placed in the metal drum, and steam was supplied so that the drum pressure was a value shown in Table 2 to heat the first-step expanded beads, thereby obtaining the expanded beads 1 having the apparent density shown in Table 2.

Example 2

An expanded bead 1 of the present example has the same configuration as the expanded bead 1 of Example 1 except that the number of the through-holes 11 is changed to four. Specifically, as illustrated in FIGS. 6 and 7, through-holes 11 (11f to 11i) of the expanded bead 1 of the present example are arranged around the central axis 10 of the expanded bead 1 at positions where intervals in the circumferential direction are approximately equal in a cut surface obtained by cutting the expanded bead 1 along a plane perpendicular to the axial direction at the center in the axial direction of the expanded bead. The method for producing the expanded bead 1 of the present example was the same as the method for producing the expanded bead 1 of Example 1 except that the shape of the small hole in the coextrusion die was changed.

Example 3

A expanded bead 1 of the present example has the same configuration as the expanded bead 1 of Example 1 except that the hole diameter d of the through-holes 11 is changed to a value shown in Table 2. The method for producing the expanded bead 1 of the present example was substantially the same as the method for producing the expanded bead 1 of Example 1 except that the shape of the small hole in the coextrusion die was changed.

Example 4

A expanded bead 1 of the present example has the same configuration as the expanded bead 1 of Example 1 except that the number of the through-holes 11 is changed to three. Specifically, as illustrated in FIGS. 8 and 9, through-holes 11 (11j to 11l) of the expanded bead 1 of the present example are arranged around the central axis 10 of the expanded bead 1 at positions where intervals in the circumferential direction are approximately equal in a cut surface obtained by cutting the expanded bead 1 along a plane perpendicular to the axial direction at the center in the axial direction of the expanded bead. The method for producing the expanded bead 1 of the present example was the same as the method for producing the expanded bead 1 of Example 1 except that the shape of the small hole in the coextrusion die was changed.

Comparative Example 1

An expanded bead of the present example is a conventional polypropylene-based resin expanded bead having no through-hole and having a solid spherical shape. The method for producing the expanded bead of the present example was substantially the same as the method for producing the expanded bead 1 of Example 1 except that a resin bead having a solid spherical shape without having a through-hole was used.

Comparative Example 2

An expanded bead of Comparative Example 2 has the same configuration as the expanded bead 1 of Example 1 except that the number of the through-holes 11 is changed to one. Although not illustrated in the drawing, the through-hole in the expanded bead of the present example is disposed to penetrate the central axis of the expanded bead. The method for producing the expanded bead of the present example was substantially the same as the method for producing the expanded bead 1 of Example 1 except that the shape of the small hole in the coextrusion die was changed.

Comparative Example 3

An expanded bead of Comparative Example 3 has the same configuration as the expanded bead 1 of Example 1 except that the number of through-holes is changed to one and the hole diameter d of the through-holes 11 is changed to a value shown in Table 3. Although not illustrated in the drawing, the through-hole in the expanded bead of the present example is disposed to penetrate the central axis of the expanded bead. The method for producing the expanded bead of the present example was the same as the method for producing the expanded bead 1 of Example 1 except that the shape of the small hole in the coextrusion die was changed and the second-step expanding was not performed.

Comparative Example 4

An expanded bead of the present example has the same configuration as the expanded bead of Example 2 except that the hole diameter d of the through-holes is changed to a value shown in Table 3. The method for producing the expanded bead of the present example was substantially the same as the method for producing the expanded bead 1 of Example 1 except that the shape of the small hole in the coextrusion die was changed.

Various properties of the expanded beads and the molded article in Examples and Comparative Examples are shown in Tables 2 and 3. Evaluation methods of the various properties shown in Tables 2 and 3 are as follows.

Evaluation of expanded beads

For measurement of the physical properties and evaluation of the expanded beads, the expanded beads after being left to stand for 24 hours under the conditions of a relative humidity of 50%, 23°C, and 1 atm to be conditioned were used.

Bulk density

The expanded beads after the conditioning are filled in a measuring cylinder so as to be naturally deposited, and a bulk volume (unit: L) of the expanded beads was read from the scale of the measuring cylinder. Then, a value obtained by dividing a mass (unit: g) of the expanded beads in the measuring cylinder by the above-described bulk volume was subjected to unit conversion, thereby calculating the bulk density (unit: $kg/m^3$) of the expanded beads.

Apparent density

The mass of the expanded beads after the conditioning was measured, and then the expanded beads were immersed in a measuring cylinder containing ethanol at a temperature of 23°C using a wire mesh. Then, in consideration of the volume of the wire mesh, the volume of the expanded beads read from the water level rise was measured. The apparent density (unit: kg/m$^3$) of the expanded beads was calculated by dividing the mass (unit: g) of the expanded beads thus obtained by the volume (unit: L) and then performing unit conversion.

Closed cell content

The method for measuring the closed cell content of the expanded beads is as described above.

Hole diameter d of through-hole

One hundred expanded beads were randomly selected from the expanded beads after the conditioning, and these expanded beads were each cut along a plane perpendicular to the axial direction at the central position in the axial direction of the expanded bead to expose a cut surface of the expanded bead. Next, photographs of the cut surfaces of the expanded beads were taken, and image analysis was performed to measure cross-sectional areas (that is, opening areas) of the through-holes of each expanded bead. Then, a diameter of a virtual perfect circle having the same area as a cross-sectional area of a through-hole was calculated, and this value was defined as the hole diameter of each through-hole. The above operation was performed on 100 expanded beads, and an arithmetic average value of the hole diameters of the through-holes was taken as the hole diameter d of the through-hole of the expanded bead.

Cross-sectional area A of expanded bead

One hundred expanded beads were randomly selected from the expanded beads after the conditioning, and these expanded beads were each cut along a plane perpendicular to the axial direction at the central position in the axial direction of the expanded bead to expose a cut surface of the expanded bead. Next, photographs of the cut surfaces of the expanded beads were taken, and image analysis was performed to calculate a cross-sectional area of a foam layer and a cross-sectional area of a cover layer in each expanded bead. Then, the sum of the cross-sectional area of the foam layer and the cross-sectional area of the cover layer was defined as the cross-sectional area of each expanded bead. Note that the cross-sectional area of the expanded bead does not include the cross-sectional areas of the through-holes. The above operation was performed on 100 expanded beads, and an arithmetic average value of the cross-sectional areas of the expanded beads was defined as the cross-sectional area A of the expanded bead.

Total cross-sectional area Ct of through-holes, cross-sectional area Ca per one through-hole

One hundred expanded beads were randomly selected from the expanded beads after the conditioning, and these expanded beads were each cut along a plane perpendicular to the axial direction at the central position in the axial direction of the expanded bead to expose a cut surface of the expanded bead. Next, photographs of the cut surfaces of the expanded beads were taken, and image analysis was performed to measure cross-sectional areas of the through-holes of each expanded bead. Then, the total cross-sectional area of the through-holes was calculated for each expanded bead.
The above operation was performed on 100 expanded beads, the arithmetic average value of the total cross-sectional areas of the through-holes was defined as the total cross-sectional area Ct of the through-holes, and a value obtained by dividing the total cross-sectional area Ct of the through-holes by the number of through-holes was defined as a cross-sectional area Ca per one through-hole. In addition, in Tables 2 and 3, a ratio Ct/A of the total cross-sectional area Ct of the through-holes to the cross-sectional area A of the expanded bead in the cut surface and a ratio Ca/A of the cross-sectional area Ca per one through-hole to the cross-sectional area A of the expanded bead are described.

Outer diameter D of expanded bead

One hundred expanded beads were randomly selected from the expanded beads after the conditioning, and these expanded beads were each cut along a plane perpendicular to the axial direction at the central position in the axial direction of the expanded bead to expose a cut surface of the expanded bead. Next, photographs of the cut surfaces of the expanded beads were taken, and image analysis was performed to measure a cross-sectional area of a foam layer, a cross-sectional area of a cover layer, and a cross-sectional area of a through-hole, in each expanded bead. Then, a diameter of a virtual perfect circle having the same area as the total of the cross-sectional area of the foam layer, the cross-sectional area of the cover layer, and the cross-sectional area of the through-hole was calculated, and this value was defined as the outer diameter of each expanded bead. The above operation was performed on 100 expanded beads, and an arithmetic average value of the outer diameters of the expanded beads was defined as an outer diameter D of the expanded bead.

Distance R between through-holes

One hundred expanded beads were randomly selected from the expanded beads after the conditioning, and these expanded beads were each cut along a plane perpendicular to the axial direction at the central position in the axial direction of the expanded bead to expose a cut surface of the expanded bead. Next, photographs of the cut surfaces of the expanded beads were taken, and image analysis was performed to measure a center-to-center distance in the individual through-holes, that is, a distance between a center point of a through-hole to be measured and a center point of a through-hole having the center point closest to the center point of the through-hole to be measured. This measurement was performed for all the through-holes formed in the expanded bead to be measured, and the arithmetic average value of the obtained center-to-center distances was defined as a distance between through-holes of the expanded bead to be measured. The above operation is performed on 100 expanded beads, and an arithmetic average value of the distances between through-holes of the expanded bead was defined as a distance R between through-holes of the expanded bead.

Minimum molding pressure

In the evaluation of a minimum molding pressure, a molded article of expanded beads was prepared by performing in-mold molding while varying the molding pressure during main heating by 0.02 MPa from 0.18 to 0.38 MPa (G). Then, the lowest molding pressure among the molding pressures at which a molded article excellent in both fusion-bondability and recoverability was obtained was defined as the minimum molding pressure. A method for preparing the molded article is specifically as follows.

First, the expanded beads were dried at 23°C for 24 hours, and then impregnated with air to increase the internal pressure, that is, the pressure in the cell, to the value shown in the "Internal pressure of expanded beads" column of Tables 2 and 3. Note that the internal pressure of the expanded beads is a value measured as follows. A mass Q (unit: g) of the expanded beads in a state where the internal pressure was increased immediately before being filled into the mold and a mass U (unit: g) of the expanded beads after a lapse of 48 hours were measured, and the difference between Q and U was defined as an increased air amount W (unit: g). These values were used to calculate the internal pressure (unit: MPa (G)) of the expanded beads on the basis of the following equation (8).

$$P = (W/M) \times R \times T/V \cdots (8)$$

M in the equation (8) is a molecular weight of air, R is a gas constant, T is an absolute temperature, and V is a volume (unit: L) obtained by subtracting a volume of the resin in the expanded beads from an apparent volume of the expanded beads. In the present example, M = 28.8 (g/mol), R = 0.0083 (MPa·L/(K·mol)), and T = 296 (K) were set.

Next, expanded beads were filled in a flat plate mold of 300 mm long × 250 mm wide × 60 mm thick by a cracking filling method. A cracking amount (specifically, a ratio of an opening amount of the mold to an inner dimension in the thickness direction) at the time of filling was set to the values shown in Tables 2 and 3, and after the filling was completed, the mold was clamped in the thickness direction to mechanically compress the expanded beads.

Next, steam was supplied into the mold to perform in-mold molding. In the in-mold molding, first, steam was supplied into the mold for 5 seconds in a state where a drain valve of the mold was opened to perform preheating. Subsequently, the drain valve was closed, and steam was supplied from one surface side of the mold to perform one-side heating until a pressure lower than the molding pressure at the time of main heating by 0.08 MPa (G) was reached. Next, steam was supplied from the other surface side of the mold to perform one-side heating until a pressure lower than the molding pressure at the time of main heating by 0.04 MPa (G) was reached. Thereafter, steam was supplied from both surfaces of the mold until the molding pressure at the time of main heating was reached to perform main heating. After completion of the main heating, the pressure in the mold was released, and the molded article was cooled in the mold until the surface pressure due to the expanding force of the molded article reached 0.04 MPa (G).

Thereafter, an aging process of leaving the molded article of expanded beads taken out from the mold to stand in an oven at 80°C for 12 hours was performed. After the aging process, the molded article was conditioned by leaving to stand for 24 hours under conditions of a relative humidity of 50%, 23°C, and 1 atm. The fusion-bondability and recoverability of the expanded beads molded article after the conditioning were evaluated, and the lowest molding pressure among the molding pressures (that is, the molding pressure at which an acceptable product was obtainable) that passed all the items in the evaluation criteria described below was defined as the minimum molding pressure. It can be determined that the lower the minimum molding pressure, the better the moldability.

The method for evaluating the fusibility and the recoverability in the evaluation of the minimum molding pressure is as follows.

· Fusion-bondability

The expanded beads molded article was broken so as to be approximately equally divided in the longitudinal direction. All expanded beads exposed on the fracture surface were visually observed, and it was determined whether the expanded beads were expanded beads broken inside the beads (that is, the expanded beads subjected to material fracture) or expanded beads broken at an interface between expanded beads. Then, a value (that is, a material fracture rate) in which a ratio of the number of expanded beads broken inside the beads to the total number of the observed expanded beads was expressed in percentage was calculated, and this value was defined as a fusion-bonded rate. Then, a case where the fusion-bonded rate was 90% or more was determined to be acceptable, and a case where the fusion-bonded rate was less than 90% was determined to be unacceptable.

· Recoverability

In a plan view of the molded article of expanded beads viewed from the thickness direction, a thickness of the molded article at each of four positions 10 mm inward from respective apexes in the center direction and a thickness of the molded article at the central portion were measured. Next, a ratio (unit: %) of the thickness of the thinnest portion to the thickness of the thickest portion among the measured portions was calculated. A case where the thickness ratio obtained in this manner was 95% or more was determined to be acceptable, and a case where the thickness ratio was less than 95% was determined to be unacceptable.

Evaluation of molding cycle

· Cooling time in mold

In-mold molding was performed in the same manner as in the evaluation of the minimum molding pressure described above except that the molding pressure during main heating was set to any one of the minimum molding pressure described above, a pressure higher by 0.02 MPa (G) than the minimum molding pressure, and a pressure higher by 0.04 MPa (G) than the minimum molding pressure. A period of time from completion of the main heating until the pressure in the mold was released and the surface pressure due to the expanding force of the molded article reached 0.04 MPa (G), that is, a cooling time of the molded article in the mold was measured. Note that in the in-mold molding of expanded beads, the cooling time in the mold tends to be longer as the molding pressure increases.

· Possibility of aging-free molding

The molding pressure during main heating was set to the minimum molding pressure described above to perform in-mold molding in the same manner as in the evaluation of the minimum molding pressure described above. Without subjecting the molded article after demolding to the aging process, the molded article after demolding was conditioned by leaving to stand for 24 hours under conditions of a relative humidity of 50%, 23°C, and 1 atm. In a plan view of the conditioned molded article viewed from the thickness direction, a thickness of the molded article at each of four positions 10 mm inward from respective apexes in the center direction and a thickness of the molded article at the central portion were measured. Next, a ratio (unit: %) of the thickness of the thinnest portion to the thickness of the thickest portion among the measured portions was calculated.

In the columns "Applicability of aging-free molding" of Tables 2 and 3, in a case where the thickness ratio was 95% or more, it was described as "acceptable", and in a case where the thickness ratio was less than 95%, it was described as "unacceptable". Note that in Comparative Example 3 and Comparative Example 4, the appearance evaluation was unacceptable as described below, and thus, the possibility of aging-free molding was not evaluated.

Evaluation of molded article

For the measurement of physical properties and evaluation of the molded article, a molded article was used which was subjected to in-mold molding at the minimum molding pressure in the same manner as in the evaluation of the minimum molding pressure, released from the mold, and then left to stand for 12 hours under conditions of a relative humidity of 50%, 23°C, and 1 atm to be conditioned without being subjected to the aging process.

Density of molded article

The density (unit: kg/m$^3$) of the molded article was calculated by dividing the mass (unit: g) of the molded article by the volume (unit: L) obtained from the outer dimension of the molded article and then performing unit conversion.

Open cell content

The open cell content was measured in accordance with ASTM 2856-70 Procedure B. Specifically, first, a cubic first test piece of 2.5 cm long × 2.5 cm wide × 2.5 cm high was cut out from a central portion of the molded article, and its geometric volume Va (unit: cm$^3$), that is, the product of the longitudinal dimension (unit: cm), the lateral dimension (unit: cm), and the height dimension (unit: cm) was calculated. Next, a true volume V1 (unit: cm$^3$) of the first test piece was measured using a dry automatic densitometer (specifically, AccuPyc II 1340 manufactured by Shimadzu Corporation).
Thereafter, the first test piece was divided into 8 equal parts to prepare second test pieces each having a cubic shape of 1.25 cm long × 1.25 cm wide × 1.25 cm high, and a true volume V2 (unit: cm$^3$) of the second test piece was measured by the dry automatic densitometer. Note that the true volume V2 of the second test pieces is the total of the true volumes of the eight test pieces cut out from the first test piece.
The open cell content (unit: %) of the first test piece was calculated on the basis of the following equation (2) using the geometric volume Va of the first test piece, the true volume V1 of the first test piece, and the true volume V2 of the second test pieces obtained as described above.

$$\text{Open cell content} = (Va - 2V1 + V2) \times 100/Va \cdots (2)$$

The above operation was performed on five first test pieces, and the open cell content of each first test piece was calculated. The arithmetic average value of the open cell contents of the five first test pieces was defined as the open cell content Co of the molded article.

Voidage of molded article

A test piece having a rectangular parallelepiped shape of 20 mm long × 100 mm wide × 20 mm high was cut out from the central portion of the molded article. The test piece was immersed in a measuring cylinder containing ethanol, and the true volume Vc (unit: L) of the test piece was determined from the increase in the liquid level of ethanol. In addition, the apparent volume Vd (unit: L) was obtained from the outer dimension of the test piece. The voidage (unit: %) of the molded article was calculated by the following equation (3) using the true volume Vc and the apparent volume Vd of the test piece obtained as described above.

$$\text{Voidage} = [(Vd - Vc)/Vd] \times 100 \cdots (3)$$

50% compressive stress $\sigma_{50}$

A test piece having a prismatic shape of 50 mm long × 50 mm wide × 25 mm thick and not including a skin surface, that is, a surface in contact with the inner surface of the mold during in-mold molding was cut out from the central portion of the molded article. According to JIS K 6767:1999, a 50% compressive stress $\sigma_{50}$ (unit: kPa) of the molded article was determined by performing a compression test at a compression rate of 10 mm/min. In addition, in Tables 2 and 3, a value ($\sigma_{50}$/density) obtained by dividing the 50% compressive stress $\sigma_{50}$ of the molded article by the density of the molded article was described.

Appearance

The surface of the molded article was visually observed, and the surface property of the molded article was evaluated on the basis of the following criteria.

A+: The surface of the molded article exhibits a very good surface state in which there are an extremely small number of gaps between beads, and irregularities caused by the through-holes are hardly noticeable.
A: A good surface state in which there are a sufficiently small number of gaps between beads on the surface of the molded article and irregularities caused by the through-holes are not so noticeable is exhibited.
B: Irregularities caused by gaps between beads and/or through-holes are slightly observed on the surface of the molded article.

C: Irregularities caused by gaps between beads and/or through-holes are remarkably observed on the surface of the molded article.

[Table 2]

(Table 2)

| | | Unit | Example 1 | Example 2 | Example 3 | Example 4 |
|---|---|---|---|---|---|---|
| First-step Expanding Process | Expanding Temperature | (°C) | 148.7 | 148.7 | 148.7 | 148.7 |
| | Pressure in Container | MPa(G) | 2.8 | 2.8 | 2.7 | 2.8 |
| Second-step Expanding Process | Internal Pressure in First-step Expanded Bead | MPa(G) | 0.5 | 0.5 | 0.5 | 0.5 |
| | Drum Pressure | MPa(G) | 0.05 | 0.05 | 0.05 | 0.05 |
| Expanded Bead | Resin of Foam Layer | - | PP1 | PP1 | PP1 | PP1 |
| | Resin of Cover Layer | - | PP2 | PP2 | PP2 | PP2 |
| | Bulk Density | kg/m$^3$ | 24.9 | 24.8 | 25.0 | 24.9 |
| | Apparent Density | kg/m$^3$ | 44.3 | 43.5 | 43.1 | 43.8 |
| | Apparent Density/ Bulk Density | - | 1.78 | 1.75 | 1.72 | 1.76 |
| | Closed Cell Content | % | 98 | 97 | 98 | 98 |
| | Shape | - | Columnar | Columnar | Columnar | Columnar |
| | Number of Through-holes | - | 5 | 4 | 5 | 3 |
| | Diameter of Through-hole d | mm | 0.32 | 0.34 | 0.40 | 0.40 |
| | Cross-sectional Area per Through-hole Ca | mm$^2$ | 0.08 | 0.09 | 0.13 | 0.13 |
| | Total of Cross-sectional Area | mm$^2$ | 0.40 | 0.36 | 0.63 | 0.38 |
| | Cross-sectional Area of Expanded Bead A | mm$^2$ | 10.3 | 10.5 | 10.1 | 10.4 |
| | Ca/A | - | 0.008 | 0.009 | 0.012 | 0.012 |
| | Ct/A | - | 0.04 | 0.03 | 0.06 | 0.04 |
| | Outer Diameter of Expanded Bead D | mm | 3.7 | 3.7 | 3.7 | 3.7 |
| | Distance between Through-holes R | mm | 0.93 | 1.32 | 0.92 | 1.60 |
| | R/d | - | 2.9 | 3.9 | 2.3 | 4.0 |
| Molding Step | Internal Pressure of Expanded Beads | MPa(G) | 0.1 | 0.1 | 0.1 | 0.1 |
| | Cracking Amount | % | 10 | 10 | 10 | 10 |
| | Minimum Molding Pressure | MPa(G) | 0.22 | 0.22 | 0.22 | 0.22 |

(continued)

| | | | Unit | Example 1 | Example 2 | Example 3 | Example 4 |
|---|---|---|---|---|---|---|---|
| Molding Cycle | Cooling Time | Minimum Molding Pressure | Second | 0 | 0 | 0 | 0 |
| | | Minimum Molding Pressure +0.02MPa(G) | Second | 7 | 9 | 5 | 12 |
| | | Minimum Molding Pressure +0.04MPa(G) | Second | 17 | 20 | 12 | 24 |
| | Applicability of Curing-free Molding | | - | Applicable | Applicable | Applicable | Applicable |
| Molded Article | Density | | kg/m$^3$ | 30.9 | 30.5 | 31.0 | 30.6 |
| | Voidage | | % | 8.3 | 8.1 | 9.1 | 8.2 |
| | 50% compressive stress $\sigma_{50}$ | | kPa | 236 | 233 | 232 | 235 |
| | $\sigma_{50}$/density | | kPa/ (kg/m$^3$) | 7.6 | 7.6 | 7.5 | 7.7 |
| | Open Cell Content | | % | 3.5 | 3.7 | 4.0 | 3.7 |
| | Appearance Evaluation | | - | A+ | A+ | A+ | A+ |

[Table 3]

(Table 3)

| | | Unit | Comparative Example 1 | Comparative Example 2 | Comparative Example 3 | Comparative Example 4 |
|---|---|---|---|---|---|---|
| First-step Expanding Process | Expanding Temperature | °C | 149.3 | 149 | 147 | 148.7 |
| | Pressure in Container | MPa(G) | 2.3 | 2.6 | 3.6 | 2.4 |
| Second-step Expanding Process | Internal Pressure in First-step Expanded Bead | MPa(G) | 0.5 | 0.5 | - | 0.5 |
| | Drum Pressure | MPa(G) | 0.05 | 0.05 | - | 0.06 |
| | Resin of Foam Layer | - | PP1 | PP1 | PP1 | PP1 |
| | Resin of Cover Layer | - | PP2 | PP2 | PP2 | PP2 |
| | Bulk Density | kg/m$^3$ kg/m$^3$ | 25.2 | 24.0 | 24.9 | 25.0 |
| | Apparent Density | | 40.3 | 42.6 | 51.1 | 47.3 |
| | Apparent Density/ Bulk Density | - | 1.60 | 1.78 | 2.05 | 1.89 |
| | Closed Cell Content | % | 98 | 98 | 96 | 98 |
| | Shape | - | Solid sperical | Columnar | Columnar | Columnar |
| | Number of Through-holes | - | 0 | 1 | 1 | 4 |
| | Diameter of Through-hole d | mm | - | 0.70 | 1.55 | 0.67 |

(continued)

| | | Unit | Comparative Example 1 | Comparative Example 2 | Comparative Example 3 | Comparative Example 4 |
|---|---|---|---|---|---|---|
| Expanded Bead | Cross-sectional Area per Through-hole Ca | $mm^2$ | - | 0.39 | 1.89 | 0.35 |
| | Total of Cross-sectional Area of Through-hole Ct | $mm^2$ | - | 0.39 | 1.89 | 1.41 |
| | Cross-sectional Area of Expanded Bead A | $mm^2$ | 10.8 | 10.3 | 8.0 | 8.2 |
| | Ca/A | - | - | 0.038 | 0.236 | 0.043 |
| | Ct/A | - | - | 0.04 | 0.24 | 0.17 |
| | Outer Diameter of Expanded Bead D | mm | 3.7 | 3.7 | 3.6 | 3.5 |
| | Distance between Through-holes R | mm | - | - | - | 1.24 |
| | R/d | - | - | - | - | 1.8 |
| Molding Step | Internal Pressure of Expanded Beads | MPa(G) | 0.1 | 0.1 | 0.1 | 0.1 |
| | Cracking Amount | % | 10 | 10 | 10 | 10 |
| | Minimum Molding Pressure | MPa(G) | 0.28 | 0.22 | 0.20 | 0.20 |
| Molding Cycle | Cooling Time | Minimum Molding Pressure | Second | 94 | 21 | 0 | 0 |
| | | Minimum Molding Pressure +0.02MPa(G) | Second | 100 | 30 | 0 | 0 |
| | | Minimum Molding Pressure +0.04MPa(G) | Second | 110 | 38 | 0 | 0 |
| | Applicability of Curing-free Molding | - | Unapplicable | Applicable | Not Evaluated | Not Evaluated |
| Molded Article | Density | $kg/m^3$ | 30.4 | 29.5 | 30.1 | 29.0 |
| | Porosity | % | 5.4 | 8.0 | 18.0 | 18.2 |
| | 50% compressive stress $\sigma_{50}$ | kPa | 239 | 224 | 176 | 178 |
| | $\sigma_{50}$/density | kPa/ $(kg/m^3)$ | 7.9 | 7.6 | 5.8 | 6.1 |
| | Open Cell Content | % | 0.4 | 3.9 | 15.0 | 13.8 |
| | Appearance Evaluation | - | A+ | A | C | C |

As shown in Table 2, the expanded beads of Example 1 to 4 each have a columnar shape and have a plurality of through-holes penetrating in the axial direction thereof. The ratio Ct/A of the total cross-sectional area Ct of the through-holes to the cross-sectional area A of each of these expanded beads is within the above-described specific range. The cooling time in the mold could be shortened by performing in-mold molding using such expanded beads. Even in a case where the expanded beads of Examples 1 to 4 were molded under the condition where the molding pressure was higher than the minimum molding pressure, the cooling time could be sufficiently shortened, and even when the aging process was omitted, a molded article of expanded beads which has a desired shape and excellent appearance and rigidity could be obtained. With the expanded beads of Examples 1 to 4, an expanded beads molded article which has better appearance was obtained, as compared to the molded article obtained from the expanded beads of Comparative Example 2 in which the ratio Ct/A was within the above-mentioned specific range and the number of through-holes was 1.

On the other hand, the expanded bead of Comparative Example 1 is a conventional polypropylene-based resin expanded bead having no through-hole. The expanded bead of Comparative Example 1 had excessively high secondary expandability, and the cooling time in the mold was significantly long as shown in Table 3. In addition, the expanded bead of Comparative Example 1 has a high molding pressure required for obtaining a molded article because a passage of steam is hardly formed during in-mold molding. Further, an open cell structure is hardly formed in the resulting molded article. Accordingly, the molded article produced using the expanded bead of Comparative Example 1 was significantly shrunk and deformed in a case where the aging process was not performed after being released from the mold.

In the expanded bead of Comparative Example 2, the cooling time in the mold was longer than that in the expanded beads of Examples 1 to 4. This is considered to be because the number of through-holes is one, and the surface area of the minute space portion derived from the through-holes of the expanded beads in the molded article tends to be small.

In the expanded beads of Comparative Example 3 and Comparative Example 4, the ratio Ct/A of the total Ct of the cross-sectional areas of the through-holes to the cross-sectional area A of the expanded bead was too large, and thus, irregularities due to the through-holes were remarkably formed on the surface of the molded article, so that the appearance was unacceptable.

Although the specific aspects of the thermoplastic resin expanded bead and the molded article of thermoplastic resin expanded beads according to the present invention have been described above on the basis of Examples, the specific aspects of the thermoplastic resin expanded beads and the like according to the present invention are not limited to the aspects of Examples, and the configuration can be appropriately changed without impairing the gist of the present invention.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A thermoplastic resin expanded bead (1) comprising a thermoplastic resin foam layer (2), wherein

   the expanded bead (1) has a columnar shape and has two or more and eight or less through-holes (11) penetrating in an axial direction of the expanded bead (1),
   a ratio Ct/A of a total cross-sectional area Ct of the through-holes (11), which is determined as specified in the description, to a cross-sectional area A of the expanded bead (1), which is determined as specified in the description, in a cut surface obtained by cutting the expanded bead (1) perpendicularly to the axial direction at a center of the expanded bead (1) in the axial direction is 0.02 or more and 0.15 or less,
   wherein a hole diameter d of the through-hole (11), which is determined as specified in the description, is 0.1 mm or more and 0.5 mm or less in the cut surface obtained by cutting the expanded bead (1) perpendicularly to the axial direction at the center of the expanded bead (1) in the axial direction.

2. The thermoplastic resin expanded bead (1) according to claim 1, wherein a ratio Ca/A of a cross-sectional area Ca per one through-hole (11), which is obtained by dividing the total cross-sectional area Ct of the through-holes (11) by the number of through-holes (11), to the cross-sectional area A of the expanded bead (1) in the cut surface obtained by cutting the expanded bead (1) perpendicularly to the axial direction at the center of the expanded bead (1) in the axial direction is 0.005 or more and 0.05 or less.

3. The thermoplastic resin expanded bead (1) according to claim 1 or 2, wherein the expanded bead (1) has four or more and eight or less of the through-holes (11).

4. The thermoplastic resin expanded bead (1) according to any one of claims 1 to 3, wherein a ratio R/d of a distance R between through-holes (11) of the expanded bead (1), which is determined as specified in the description, to the hole diameter d of the through-hole (11) in the cut surface obtained by cutting the expanded bead (1) perpendicularly to the axial direction at the center of the expanded bead (1) in the axial direction is 2.0 or more and 4.5 or less.

5. The thermoplastic resin expanded bead (1) according to any one of claims 1 to 4, wherein a bulk density of the expanded beads (1), which is determined as specified in the description, is 10 kg/m$^3$ or more and 50 kg/m$^3$ or less, and a ratio of an apparent density, which is determined as specified in the description, to the bulk density in the expanded beads (1) is 1.7 or more and 1.9 or less.

6. The thermoplastic resin expanded bead (1) according to any one of claims 1 to 5, wherein the thermoplastic resin constituting the foam layer (2) is an ethylene-propylene random copolymer, and the ethylene-propylene random copolymer contains 0.5 mass% or more and 3.5 mass% or less of an ethylene component.

7. The thermoplastic resin expanded bead (1) according to any one of claims 1 to 6, wherein the expanded bead (1) has a thermoplastic resin cover layer (3) covering the foam layer (2), and the cover layer (3) is composed of a thermoplastic resin of which a melting point or a softening point is lower than a melting point of a thermoplastic resin constituting the foam layer (2).

8. A molded article of thermoplastic resin expanded beads (1), the molded article being obtained by in-mold molding of the thermoplastic resin expanded bead (1) according to any one of claims 1 to 7.

9. The molded article of thermoplastic resin expanded beads (1) according to claim 8, wherein the molded article has an open cell content, which is determined as specified in the description, of 2% or more and 12% or less.

**Patentansprüche**

1. Expandiertes Kügelchen (1) aus thermoplastischem Harz mit einer Schaumstoffschicht (2) aus thermoplastischem Harz, bei dem

das expandierte Kügelchen (1) eine säulenförmige Form aufweist und zwei oder mehr und acht oder weniger Durchgangslöcher (11), die es in einer axialen Richtung des expandierten Kügelchens (1) durchdringen, aufweist,
ein Verhältnis Ct/A einer Gesamtquerschnittsfläche Ct der Durchgangslöcher (11), die wie in der Beschreibung spezifiziert bestimmt wird, zu einer Querschnittsfläche A des expandierten Kügelchens (1), die wie in der Beschreibung spezifiziert bestimmt wird, in einer Schnittfläche, die durch Schneiden des expandierten Kügelchens (1) senkrecht zu der axialen Richtung in einer Mitte des expandierten Kügelchens (1) in der axialen Richtung erhalten wird, 0,02 oder mehr und 0,15 oder weniger beträgt,
bei dem ein Lochdurchmesser d des Durchgangslochs (11), der wie in der Beschreibung spezifiziert bestimmt wird, in der Schnittfläche, die durch Schneiden des expandierten Kügelchens (1) senkrecht zu der axialen Richtung in der Mitte des expandierten Kügelchens (1) in der axialen Richtung erhalten wird, 0,1 mm oder mehr und 0,5 mm oder weniger beträgt.

2. Expandiertes Kügelchen (1) aus thermoplastischem Harz nach Anspruch 1, bei dem ein Verhältnis Ca/A einer Querschnittsfläche Ca pro einem Durchgangsloch (11), die durch Teilen der Gesamtquerschnittsfläche Ct der Durchgangslöcher (11) durch die Anzahl von Durchgangslöchern (11) erhalten wird, zu der Querschnittsfläche A des expandierten Kügelchens (1) in der Schnittfläche, die durch Schneiden des expandierten Kügelchens (1) senkrecht zu der axialen Richtung in der Mitte des expandierten Kügelchens (1) in der axialen Richtung erhalten wird, 0,005 oder mehr und 0,05 oder weniger beträgt.

3. Expandiertes Kügelchen (1) aus thermoplastischem Harz nach Anspruch 1 oder 2, bei dem das expandierte Kügelchen (1) vier oder mehr und acht oder weniger der Durchgangslöcher (11) aufweist.

4. Expandiertes Kügelchen (1) aus thermoplastischem Harz nach einem der Ansprüche 1 bis 3, bei dem ein Verhältnis R/d eines Abstands R zwischen Durchgangslöchern (11) des expandierten Kügelchens (1), der wie in der Beschreibung spezifiziert bestimmt wird, zu dem Lochdurchmesser d des Durchgangslochs (11) in der Schnittfläche, die durch Schneiden des expandierten Kügelchens (1) senkrecht zu der axialen Richtung in der Mitte des expandierten Kügelchens (1) in der axialen Richtung erhalten wird, 2,0 oder mehr und 4,5 oder weniger beträgt.

**5.** Expandiertes Kügelchen (1) aus thermoplastischem Harz nach einem der Ansprüche 1 bis 4, bei dem eine Schüttdichte der expandierten Kügelchen (1), die wie in der Beschreibung spezifiziert bestimmt wird, 10 kg/m$^3$ oder mehr und 50 kg/m$^3$ oder weniger beträgt, und ein Verhältnis einer scheinbaren Dichte, die wie in der Beschreibung spezifiziert bestimmt wird, zu der Schüttdichte in den expandierten Kügelchen (1) 1,7 oder mehr und 1,9 oder weniger beträgt.

**6.** Expandiertes Kügelchen (1) aus thermoplastischem Harz nach einem der Ansprüche 1 bis 5, bei dem das thermoplastische Harz, das die Schaumstoffschicht (2) darstellt, ein statistisches Ethylen-Propylen-Copolymer ist, und das statistische Ethylen-Propylen-Copolymer 0,5 Masseprozent oder mehr und 3,5 Masseprozent oder weniger einer Ethylenkomponente enthält.

**7.** Expandiertes Kügelchen (1) aus thermoplastischem Harz nach einem der Ansprüche 1 bis 6, bei dem das expandierte Kügelchen (1) eine Deckschicht (3) aus thermoplastischem Harz, die die Schaumstoffschicht (2) bedeckt, aufweist, und die Deckschicht (3) aus einem thermoplastischen Harz besteht, ein Schmelzpunkt oder ein Erweichungspunkt dessen niedriger als ein Schmelzpunkt eines thermoplastischen Harzes ist, das die Schaumstoffschicht (2) darstellt.

**8.** Geformter Artikel aus expandierten Kügelchen (1) aus thermoplastischem Harz, der durch Formen des expandierten Kügelchens (1) aus thermoplastischem Harz nach einem der Ansprüche 1 bis 7 in einer Form erhalten wird.

**9.** Geformter Artikel aus expandierten Kügelchen (1) aus thermoplastischem Harz nach Anspruch 8, bei dem der geformte Artikel einen Offenzellgehalt, der wie in der Beschreibung spezifiziert bestimmt wird, von 2% oder mehr und 12% oder weniger aufweist.

**Revendications**

**1.** Bille expansée en résine thermoplastique (1) comprenant une couche de mousse de résine thermoplastique (2), dans laquelle

la bille expansée (1) a une forme de colonne et possède deux ou plus et huit ou moins trous traversants (11) pénétrant dans une direction axiale de la bille expansée (1), un rapport Ct/A d'une surface de section transversale totale Ct des trous traversants (11), qui est déterminé comme spécifié dans la description, à une section transversale A de la bille expansée (1), qui est déterminée comme spécifiée dans la description, dans une surface de coupe obtenue en coupant la bille expansée (1) perpendiculairement à la direction axiale en un centre de la bille expansée (1) dans la direction axiale est de 0,02 ou plus et 0,15 ou moins,
dans laquelle un diamètre d'un trou d du trou traversant (11), qui est déterminé comme indiqué dans la description, est de 0,1 mm ou plus et 0,5 mm ou moins dans la surface de coupe obtenue en coupant la bille expansée (1) perpendiculairement à la direction axiale au centre de la bille expansée (1) dans la direction axiale.

**2.** Bille expansée en résine thermoplastique (1) selon la revendication 1, dans lequel un rapport Ca/A d'une section transversale Ca par un trou traversant (11), qui est obtenu en divisant la section transversale totale Ct des trous traversants (11) par le nombre de trous traversants (11), à la section transversale A de la bille expansée (1) dans la surface de coupe obtenue en coupant la bille expansée (1) perpendiculairement à la direction axiale au centre de la bille expansée (1) dans la direction axiale, est de 0.005 ou plus et 0,05 ou moins.

**3.** Bille expansée en résine thermoplastique (1) selon la revendication 1 ou 2, dans laquelle la bille expansée (1) a quatre ou plus et huit ou moins de trous traversants (11).

**4.** Bille expansée en résine thermoplastique (1) selon l'une quelconque des revendications 1 à 3, dans laquelle un rapport R/d d'une distance R entre les trous traversants (11) de la bille expansée (1), qui est déterminé comme spécifié dans la description, au diamètre du trou d du trou traversant (11) dans la surface de coupe obtenue en coupant la bille expansée (1) perpendiculairement à la direction axiale au centre de la bille expansée (1) dans la direction axiale est de 2,0 ou plus et 4,5 ou moins.

**5.** Bille expansée en résine thermoplastique (1) selon l'une quelconque des revendications 1 à 4, dans laquelle une densité apparente des billes expansées (1), déterminée comme spécifiée dans la description, est de 10 kg/m$^3$ ou plus et 50 kg/m$^3$ ou moins, et un rapport entre une densité apparente, qui est déterminé comme spécifié dans la description, et la densité apparente dans les billes expansées (1) est de 1,7 ou plus et 1,9 ou moins.

**6.** Bille expansée en résine thermoplastique (1) selon l'une quelconque des revendications 1 à 5, dans laquelle la résine thermoplastique constituant la couche de mousse (2) est un copolymère aléatoire éthylène-propylène, et le copolymère aléatoire éthylène-propylène contient 0,5 % en masse ou plus et 3,5 % en masse ou moins d'un composant d'éthylène.

**7.** Bille expansée en résine thermoplastique (1) selon l'une quelconque des revendications 1 à 6, dans laquelle la bille expansée (1) comporte une couche de couverture en résine thermoplastique (3) recouvrant la couche de mousse (2), et la couche de couverture (3) est composée d'une résine thermoplastique dont un point de fusion ou un point de ramollissement est inférieur à un point de fusion d'une résine thermoplastique constituant la couche de mousse (2).

**8.** Article moulé en billes expansées en résine thermoplastique (1), l'article moulé étant obtenu par moulage dans le moule de la bille expansée en résine thermoplastique (1) selon l'une quelconque des revendications 1 à 7.

**9.** Article moulé en billes expansées en résine thermoplastique (1) selon la revendication 8, dans lequel l'article moulé a une teneur en cellules ouvertes, déterminées comme spécifiées dans la description, de 2 % ou plus et de 12 % ou moins.

FIG. 1

FIG. 2

FIG. 3

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000129028 A
- JP H07137064 A
- EP 0697274 A2